(19) Europäisches Patentamt
European Patent Office
Office européen des brevets

(11) **EP 1 768 888 B1**

(12) **EUROPÄISCHE PATENTSCHRIFT**

(45) Veröffentlichungstag und Bekanntmachung des Hinweises auf die Patenterteilung:
**21.05.2014 Patentblatt 2014/21**

(21) Anmeldenummer: 05762346.4

(22) Anmeldetag: **15.06.2005**

(51) Int Cl.:
**B62D 6/00** [(2006.01)]

(86) Internationale Anmeldenummer:
**PCT/EP2005/006408**

(87) Internationale Veröffentlichungsnummer:
**WO 2006/007908 (26.01.2006 Gazette 2006/04)**

(54) **VERFAHREN ZUR ERHÖHUNG DER FAHRSTABILITÄT EINES KRAFTFAHRZEUGS**

METHOD FOR INCREASING THE DRIVING STABILITY OF A MOTOR VEHICLE

PROCEDE POUR RENFORCER LA TENUE DE ROUTE D'UNE AUTOMOBILE

(84) Benannte Vertragsstaaten:
**DE FR GB IT**

(30) Priorität: **20.07.2004 DE 102004035004**

(43) Veröffentlichungstag der Anmeldung:
**04.04.2007 Patentblatt 2007/14**

(73) Patentinhaber: **Bayerische Motoren Werke Aktiengesellschaft
80809 München (DE)**

(72) Erfinder:
• **ODENTHAL, Dirk
80689 München (DE)**
• **LOHNINGER, Roland
80803 München (DE)**

(56) Entgegenhaltungen:
**DE-A1- 10 141 273    DE-A1- 10 212 582**

EP 1 768 888 B1

**Beschreibung**

Die vorliegende Erfindung betrifft ein Verfahren zur Erhöhung der Fahrstabilität eines Kraftfahrzeugs nach dem Oberbegriff des Anspruchs 1 sowie ein nach dem erfindungsgemäßen Verfahren arbeitendes Computerprogrammprodukt.

Es existieren eine Vielzahl von Verfahren und entsprechenden fahrdynamischen Reglungssystemen, mit denen eine gezielte Änderung der gesamten Fahrdynamik, oder eine separate Beeinflussung der Quer-, Gier-, Längs- Hub-, Nick- und Wankdynamik eines Kraftfahrzeugs möglich ist. Diese nachfolgend in einer Auswahl kurz dargestellten Reglungssysteme bedienen sich unterschiedlicher Aktuatorik und unterschiedlicher Eingriffsprinzipien:

1. Aktive Lenkeingriffe

Bei konventionell gelenkten Fahrzeugen besteht ein festes Verhältnis zwischen Lenkradeinschlag und dem Lenkwinkel der gelenkten Räder, bei konventioneller Vorderradlenkung demnach dem Vorderradlenkwinkel. Mittels einer aktiven Lenkung kann zusätzlich zu dem vom Fahrer aufgebrachten Lenkwinkel $\delta_L$ ein Zusatzlängswinkel $\delta_C$ gestellt werden. Der Fahrzustand wird durch eine geeignete Sensorik erfasst und über ein Regelgesetz und einen Lenkaktuator zur Erzeugung eines stabilisierenden Zusatzlenkwinkels verwendet. Ansätze zur Erhöhung der Fahrstabilität bei einem Fahrzeug durch aktive Lenkeingriffe sind u.a. in DE 102 21 717 A1 und DE 101 41 273 A1 offenbart.

Beim aktiven Lenken wird über ein aktives Eingreifen in die Vorderradlenkung und/oder auch Hinterradlenkung eine Stabilisierung der Quer- und Gierdynamik herbeigeführt, siehe DE 40 28 320 C2. In dem grundlegenden Aufsatz "Adaptive steering" von J.T. Kasselmann und T.W. Keranen "Adaptive Steering", Bendix Technical Journal, 1969, S. 26-35, wird eine in ein Versuchsfahrzeug integrierte mechanische Additionslenkung beschrieben, bei der ein hydraulisches Stellglied eingesetzt wurde, um über eine seitliche Verschiebung des Lenkgetriebes ein Zusatzlenkwinkel zu dem über das Lenkrad aufgebrachten Lenkwinkel zu stellen. Ein weiteres Prinzip einer Additionslenkung wurde auf dem XXVI. Fisita-Kongress in Prag 1996 von W. Krämer und M. Hackl in dem Beitrag "Potential functions and benefits of electronic steering assistance", Paper B0304, S. 1-15 vorgestellt, zu dem der Zusatzlenkwinkel mechanisch durch eine Verdrehung der geteilten Längssäule mittels eines elektromotorisch angetriebenen Planetengetriebes erzeugt wird. Auf die Möglichkeiten einer aktiven Hinterachslenkung wird von E. Donges u.a. in dem Aufsatz "Funktion und Sicherheitskonzept der aktiven Hinterachskinematik von BMW" eingegangen, der in der Automobiltechnische Zeitschrift, Band 10, Seiten 580-587, 1990 veröffentlicht wurde.

2. Radindividuelle Bremseingriffe

Durch radindividuelle Modulation des Bremsdrucks (Druckanhebung, Druckabsenkung) kann bei heutigen mit ESP und ABS ausgestatteten Bremssystemen ein stabilisierendes Giermoment auf das Kraftfahrzeug aufgebracht werden. Bei einem Antiblockierregelsystem ABS und bestehenden Fahrdynamikregelungssystemen, wie z.B. dem elektronischen Stabilitätsprogramm ESP der Firma Bosch, wird in längs-, quer- und gierdynamisch kritischen Situationen in die Fahrdynamik in der Weise stabilisierend eingegriffen, dass das Fahrzeug vom Fahrer möglichst in gewohnter Weise handhabbar bleibt, siehe hierzu den Fachartikel von A. van Zanten u.a.: FDR - Die Fahrdynamikregelung von Bosch in ATZ Automobiltechnische Zeitschrift, 1994, Jg.96, Heft 11, S.674-689.

3. Eingriffe über Veränderung der Querkraft- oder Quermomentenverteilung

Eine Vorrichtung zur Quermomentenverteilung an der Hinterachse eines Kraftfahrzeuges ist beispielsweise unter Verwendung eines Überlagerungsgetriebes aus einem Planetendifferential und zwei Überlagerungskupplungen wird in der EP 575 151 A1 "Vehicular left/right drive force adjusting apparatus" offenbart. Eine derartige Querkraft- oder Quermomentenverteilung an Vorder- und/oder Hinterachse kann prinzipiell auch durch kombinierte Brems- und Motoreingriffe realisiert werden.

4. Eingriffe über Veränderung der Längskraft- oder Längsmomentenverteilung

Eine unter dem Produktnamen X-Drive offenbarte Längsmomenten- oder Längskraftverteilung ist in einem Fachartikel von G. Fischer, W. Pfau, H.-S. Braun und C. Billig unter dem Titel "x-Drive - Der neue Allradantrieb im BMW X3 und BMW X5" in Automobiltechnische Zeitschrift ATZ, Ausgabe Nr.: 2004-02, veröffentlicht worden. Über eine, unter anderem über dieses System, verfügbare Möglichkeit der variablen Längskraft- oder Längsmomentenverteilung LV lässt sich das Antriebs- und Schleppmoment kontinuierlich zwischen Vorder- und Hinterachse verteilen, womit sich indirekt über die achsweise Modulation der Längskräfte ein definiertes Giermoment aufbringen lässt.

5. Eingriffe über Veränderung von Radaufstandskräften:

Unter den Bezeichnungen "Active Body Control" ABC, die direkt über die Sekundärfederung eingreift und damit neben Wank- auch Hub- und Nickdynamik verändert und somit u.a. Einfluss auf die "Nicksteifigkeitsverteilung" nimmt, oder "Dynamic Drive" DD sind Systeme zum Aufbringen eines stabilisierenden Giermoments durch Modulation der Rollsteifigkeitsverteilung zwischen Vorder- und Hinterachse innerhalb eines Kraftfahrzeuges bekannt geworden. Über die Rollsteifigkeitsverteilung ist eine weitere Möglichkeit gegeben, die Radaufstandskräfte und damit indirekt die Längs- und Seitenkräfte zu beeinflussen.

6. Eingriffe über die Motorregelung

Alternativ oder zusätzlich insbesondere zu Bremseingriffen können regelnde Eingriffe auch über die Motorregelung vorgenommen werden. Durch Modulation der Längsdynamik kann damit indirekt die Quer- und Gierdynamik beeinflusst werden. Für diesen Ansatz wird auf Fachliteratur beispielsweise das Fachbuch von Manfred Mitschke, Dynamik der Kraftfahrzeuge, Band. A, Antrieb und Bremsung, Springer Verlag, 3. neubearbeitete Auflage 1995, verwiesen.
So ist, basierend auf den vorstehend dargestellten Ansätzen zur Erhöhung der Fahrstabilität, u.a. auch bekannt, durch Beeinflussung eines Giermoments auf die Fahreigenschaften eines Kraftfahrzeugs stabilisierend einzuwirken.
Eine frühe Basis für eine generelle Untersuchung der Fahreigenschaften von Kraftfahrzeugen stellt das sog. Einspurmodell dar, das bereits 1940 von R. Riekert und T. Schunck unter dem Titel "Zur Fahrmechanik des gummibereiften Kraftfahrzeugs" im Ingenieur-Archiv veröffentlicht wurde. Hierin wird jedes Kraftfahrzeug auf ein ebenes Zweirad zurückgeführt. Aufbauend auf dem Einspurmodell offenbart beispielsweise die DE 195 15 051 A1 eine Gierraten- und Sehwimmwinkelgeschwindigkeitsregelung, bei der Gierrate und Schwimmwinkel über einen Beobachter berechnet werden. Ein zusätzliches Giermoment wird als Stellgröße durch einen entsprechenden Regler erzeugt. Das Verfahren arbeitet mit selektiven Bremseingriffen an den Rädern des Kraftfahrzeugs, wie vorstehend zu den radindividuellen Bremseingriffen ausgeführt.
Auch die DE 195 15 053 A1 offenbart eine Giermomentenregelung zur Fahrzeugstabilisierung, wobei hier jedoch eine Differenz im Schräglaufwinkel zwischen der Vorderachse und der Hinterachse als Regelgröße verwendet wird. Referenzwerte für eine Gierrate werden anhand von Lenkwinkel, Radstand, Geschwindigkeit und einer vorzugebenden Konstante für Unter- oder Übersteuern des Kraftfahrzeugs wiederum auf der Basis des Einspurmodells für Kraftfahrzeuge berechnet.
Aus der DE 100 11 779 A1 ist ein Verfahren bekannt, nach dem eine Regelung der Fahrstabilität eines Kraftfahrzeuges ohne Gierratensensor dadurch ermöglicht, wird, dass eine Ist-Gierwinkelgeschwindigkeit unter Einbeziehung am Reifen angreifender Ist-Kräfte und einem aktuellen Lenkwinkel über eine Integration der Gierwinkelgeschwindigkeit geschätzt wird.
Schließlich beschreibt die DE 102 12 582 A1 als nächstkommender Stand der Technik ein Verfahren und eine Vorrichtung zur Regelung der Fahrdynamik, wobei mindestens ein Lenkeingriff an einer Fahrzeugachse geregelt wird, eine Soll-Fahrdynamik, mindestens beschrieben durch eine Soll-Gierdynamik, ermittelt wird und ein Lenkwinkel-Vorsteuerwert aufgrund der Soll-Fahrdynamik unter Verwendung eines Modells der Regelstrecke bestimmt wird. Ermittelt werden dabei der Fahrzustand, mindestens beschrieben durch die Gierrate, ferner mindestens ein Lenkwinkel-Korrekturwert aufgrund der Abweichung der Ist-Gierrate von einer Soll-Gierrate, woraus schließlich der Lenkeingriff durch den Lenkwinkel-Vorsteuerwert und den mindestens einen Lenkwinkel-Korrekturwert festgelegt wird.
Aufgabe der vorliegenden Erfindung ist es, ein gegenüber dem Stand der Technik schneller ansprechendes und damit auch hinsichtlich seiner Zuverlässigkeit verbessertes Verfahren zur Stabilisierung eines Kraftfahrzeugs sowie ein dementsprechendes Computerprogrammprodukt zu schaffen.
Diese Aufgaben werden erfindungsgemäß durch die Merkmale der jeweiligen unabhängigen Patentansprüche gelöst. Dementsprechend zeichnet sich ein erfindungsgemäßes Verfahren dadurch aus, dass eine modellgestützte Vorsteuerung benutzt wird, um ein kompensierendes bzw. stabilisierendes Giermoment auf das Kraftfahrzeug aufzubringen. Jede Form einer Regelung weist den Nachteil auf, dass sie erst mit dem Auftreten einer Abweichung eingreifen kann. Vor einem effektiven Eingriff der Regelung muss also stets eine gewisse Zeitspanne verstreichen, binnen derer eine Abweichung i.d.R. weiter ansteigt. Dahingegen reagiert eine modellgestützte Vorsteuerung bereits auf der Grundlage der Größen, die eine nachfolgende Änderung oder Abweichung immer dann hervorrufen würden, wenn eine modellbasierte Kompensationsgröße durch die Vorsteuerung nicht bereitgestellt werden würde. Als modellgestützte Vorsteuerung bzw. Stabilisierungsfunktion wird dabei im Rahmen der vorliegenden Erfindung eine Funktion verstanden, die zur Erzeugung einer querdynamischen Stell- und/oder Ausgangsgröße Fahrervorgaben und/oder längsdynamische Mess- oder Schätzgrößen verwendet.
Die Vorsteuerung basiert damit auf vorgegebenen Werten als Eingangsdaten für ein Modell zur Vorhersage von Reaktionen oder zu deren Abschätzung. Jede Form einer Regelung baut hingegen erst auf einer Fahrzeugreaktion auf, so dass systembedingt durch das Auftreten einer Regelabweichung eine zeitliche Verspätung gegenüber einem erfindungsgemäßen Vorsteuerungs-basierten Verfahren entsteht. Damit greift eine Vorsteuerung immer schneller als jede Form der Regelung ein. In Abhängigkeit von der Güte des zugrundeliegenden Modells wird durch die Kompensationsgröße eine wesentliche Reduktion der Störgröße bis hin zu dessen vollständiger Kompensation bzw. Elimination bewirkt. Erfindungsgemäß ist also zur Reduktion eines Längsdynamikeinflusses auf die Quer- und Gierdynamik ein kompensierendes Giermoment auf das Kraftfahrzeug aufzubringen. Dementsprechend ist ein Computerprogrammprodukt zur Umsetzung eines erfindungsgemäßen Verfahrens als eigenständige Lösung der vorstehend genannten Aufgabe ausgebildet.

Erfindungsgemäß wird eine wesentliche Reduktion eines Längsdynamikeinflusses auf die Quer- und Gierdynamik des Kraftfahrzeugs dadurch erreicht, dass der Vorsteuerung ein Fahrzeugmodell zugrunde gelegt wird, das ein um Längsdynamikeinflüsse erweitertes Einspurmodell ist. Das Einspurmodell kann prinzipiell hinsichtlich seiner Modellgenauigkeit durch ein Zweispurmodell, wie beispielsweise in der DE 40 30 704 A1 offenbart, übertroffen werden. Das gilt jedoch nur dann, wenn u.a. Parameter und Kennlinien des Zweispurmodells auch über Online-Identifikation zur Verfügung gestellt werden. Ein schneller Kompensationseingriff kann bei vertretbarem Parametrier- und/oder Rechenaufwand nur auf der Basis eines in vorstehender Weise modifizierten Einspurmodells erreicht werden.

Erfindungsgemäß wird damit eine Entkopplung der Quer-/Gierdynamik von der Längsdynamik bewirkt. Vorzugsweise ist hierzu in einer Ausbildungsform der Erfindung vorgesehen, dass bei der modellgestützten Vorsteuerung mindestens eine Größe benutzt wird, die sich aus einem Unterschied zwischen dem Einspurmodell und dem um Längsdynamik-Einflüsse erweiterten Einspurmodell ergibt.

Im Stand der Technik werden keine Verfahren für die regelungstechnische Auslegung einer Fahrdynamikregelung angegeben, die einen systematischen Entwurf eines Regelungssystems zur Realisierung einer Entkopplung der Quer- und/oder Gierdynamik von der Längsdynamik eines Fahrzeuges beschreiben, denn dies ist kein Ziel der auf dem Markt befindlichen Regelsysteme. Auf Grund praktischer Restriktionen ist eine Entkopplung aufgrund der vorliegenden Reglerstrukturen nach dem Stand der Technik und der verfolgten Ziele auch nur bedingt möglich. Bei Systemen mit radindividuellen Bremseingriffen wird fahrsituationsabhängig bei bestimmter Bremsverzögerung durch radselektives Absenken bzw. Anheben des Bremsdrucks dem Einfluss der Längsdynamik auf das Gierverhalten Rechnung getragen. Bei Lastwechselreaktionen kann die Motorregelung dafür sorgen, dass das Schleppmoment möglichst klein wird. Damit wird auch der Einfluss der Lastwechselreaktion auf das Gierverhalten minimiert. Die Sollwertbildung für Gierrate, Querbeschleunigung, Schwimmwinkelgeschwindigkeit in aktuellen Regelsystemen (z. B. AL, DSC/ESP, DD/ABC, ...) nur auf dem herkömmlichen Einspurmodell, also ohne Berücksichtigung der Längsdynamik. Hierbei ist eine quasistationäre Geschwindigkeitsänderung auszunehmen. Die Änderung der Längsdynamik wird in einem herkömmlichen Einspurmodell nicht berücksichtigt. Eine derartige Änderung wird von den darauf aufbauenden Fahrstabilisierungssystemen lediglich als Störung aufgefasst, welche systembedingt nur teilweise ausgeregelt wird. Von einem Fahrer fordert diese Eigenschaft jedoch zusätzlichen Lenkaufwand und kann bereits im Linearbereich der Reifen ein besonders schwer beherrschbares nichtlineares Verhalten des Fahrzeugs verursachen. Kompensierende Lenkeingriffe des Fahrers im Linearbereich können beispielsweise bei Lastwechselreaktionen bereits zu einer Destabilisierung des Fahrzeugs durch Überkompensation, d.h. durch zu spätes und zu heftiges Reagieren des Fahrers, führen. Dieses Phänomen kann unter dem Begriff der "Driver Induced Oscillations" geführt werden.

Eine vorstehend angegebene Entkopplung der Quer- und Gierdynamik von der Längsdynamik bewirkt hingegen im Antriebs-, Lastwechsel- und Bremsfall u.a.:

- lineares Gierverhalten im Linearbereich der Reifen;

- Reduktion des Lenkaufwandes beim Beschleunigen, Verzögern oder bei Lastwechseln;

- vorausschauende Stabilisierung durch Vorsteuerung;

- Vermeidung von "Driver induced Oscillations";

- leichtere Beherrschbarkeit des Fahrzeugs durch den Fahrer bei einer vorteilhaften Vergrößerung des Linearbereichs;

- Verkürzung des Bremsweges

und ist zudem über Aktuatoren bei aktiver Vorderradlenkung bzw. Aktivlenkung AL, aktiver Hinterradlenkung HL, Quermomentenverteilung an der Hinterachse QH, Quermomentenverteilung an der Vorderachse QV, Längsmoment- oder Längskraftverteilung LV bei allradgetriebenen Fahrzeugen sowie aktiven Fahrwerksregelungs-systemen (DD, ABC) einsetzbar. Bei Realisierung mit aktiver Vorderradlenkung (AL) und/oder aktiver Hinterradlenkung (HL) und/oder Quermomentenverteilung an der Hinterachse QH und/oder Quermomentenverteilung an der Vorderachse QV ergeben sich zudem erhöhte Stabilitätsreserven bzw. Vergrößerungen des Linearbereichs bezogen auf die jeweilige Achse. Zudem zeichnet sich der vorstehend skizzierte Ansatz durch eine leichte Applizierbarkeit aus, da er vollständig physikalisch motiviert ist, worauf nachfolgend noch unter Bezugnahme auf Abbilduhgen der Zeichnung zu Ausführungsbeispielen der Erfindung im Detail eingegangen werden wird. Trotz vielfältiger Annahmen und Vereinfachungen, auf die ebenfalls noch im Detail hingewiesen werden wird, weist der gewählte Ansatz eine überraschend hohe Robustheit gegen Modellfehler auf.

Als Eingangssignale für ein erfindungsgemäßes Vorsteuerverfahren werden zumindest die folgenden drei Größen verwendet, welche in möglichen Ausführungsform die einzigen Eingangssignale darstellen können, nämlich:

1. ein effektiver Lenkwinkel, der sich aus einem Fahrerlenkwinkel ergeben kann,

2. eine Fahrzeug-Referenzgeschwindigkeit, die in allen,gängigen Fahrzeugregelungssystemen zur Verfügung gestellt wird und

3. ein Wert für die Längsbeschleunigung, der vorzugsweise von einem Längsbeschleunigungssensor ausgegeben, aus Motor- und Bremsmomentenwerten oder der zeitlichen Ableitung der Fahrzeugreferenzgeschwindigkeit bestimmt werden kann.

Unter dem Begriff der modellgestützten Vorsteuerung bzw. Stabilisierungsfunktion wird also unter Beachtung der vorstehenden Erläuterungen hier eine Funktion verstanden, die zur Erzeugung einer querdynamischen Stell- und/oder Ausgangsgröße ausschließlich Fahrervorgaben, wie Lenkwinkel, Gaspedalstellung, Bremspedalstellung und/oder längsdynamische Mess-und/oder Schätzgrößen für Längsbeschleunigung $a_x$, Geschwindigkeit v, Schlupf $\lambda_v$ an der Vorderachse va und Schlupf $\lambda_n$ an der Hinterachse ha verwendet. Querdynamische Größen werden also mit Ausnahme der Gierrate für die Bestimmung des mittleren Schlupfes an Vorder- und Hinterachse va, ha keine verwendet.

Optional können auch wahlweise noch einige der folgenden Größen in ein erweitertes Vorsteuerverfahren einfließen:

- Längsmoment-/Längskraftverteilung LMV zwischen Vorder- und Hinterachse, die insbesondere aus der Längsbeschleunigung und/oder dem Längsschlupf an der Vorderachse und der Hinterachse berechnet werden kann;
- Mittlerer Radschlupf an Vorderachse va und Hinterachse ha, wobei diese bspw. mit Hilfe der Fahrzeugreferenzgeschwindigkeit, den vier Raddrehzahlen und der Gierrate ermittelt werden können;
- Masse, Gierträgheitsmoment, Schwerpunktlage, wobei in einer Grundform eines erfindungsgemäßen Verfahrens von festen Werten ausgegangen wird;
- mittlerer Schräglaufwinkel an Vorder- und Hinterachse mittels geeigneter Sensorik;
- mittlerer Kraftschlusskoeffizient an Vorder- und Hinterachse mittels geeigneter Sensorik;
- mittlere Schräglaufsteifigkeiten an Vorder- und Hinterachse mittels geeignetem Beobachter.

Für ein ereignisdiskretes Ein- und/oder Ausschalten einer erfindungsgemäßen Funktion, z.B. nur in einem Lastwechselfall und/oder Geschwindigkeits-gesteuert, kann ein entsprechendes Signal generiert oder zur Verfügung gestellt werden, beispielsweise vom Bremsensystem oder von einer Motor-Steuereinheit. Weiterhin kann hierfür beispielsweise die Fahrzeugreferenzgeschwindigkeit oder die Längsbeschleunigung herangezogen werden. In einer Grundform eines erfindungsgemäßen Verfahrens wird von einem kontinuierlichem System ausgegangen, d.h. dass ein erfindungsgemäßes Verfahren kontinuierlich sowohl im Antriebs- und Lastwechselfall, als auch im Bremsfall läuft.

Ein erfindungsgemäßes Verfahren zeichnet sich also in einer Grundform, wie auch in Weiterbildungen dadurch besonders aus, dass die Abhängigkeit des Eigenlenkverhaltens des Fahrzeugs von der Längsdynamik hierbei durch eine modellgestützte Vorsteuerung deutlich reduziert wird. Als Einflussgrößen der Längsdynamik können dabei Geschwindigkeit, Längsbeschleunigung, Antriebs-, Brems-, Schleppkraftverteilung zwischen Vorder- und Hinterachse, Längsschlupf, etc. berücksichtigt werden. Die Eingangsgrößen werden von im Kraftfahrzeug bereits vorhandenen Sensorsystemen bezogen oder von vorhandenen oder zusätzlichen Beobachtern zur Verfügung gestellt.

Zwar wird im Rahmen der vorliegenden Erfindung der Begriff einer Stabilisierung im regelungstechnischen Sinn verstanden, was jedoch nicht bedeutet, dass ein erfindungsgemäßes.Verfahren grundsätzlich immer eine Erhöhung der Stabilität der Fahreigenschaften eines Fahrzeugs bewirkt. Im Beschleunigungsfall senkt ein erfindungsgemäßes Verfahren nämlich die Stabilität der Fahrzeug-Fahreigenschaften in einem vertretbaren Maß ab, um die Agilität des Fahrzeugs und damit den Fahrkomfort zu erhöhen.

Für einen Anwender bzw. Fahrer ergeben sich damit folgende Vorteile:

- Reduktion der Gierstörungen durch Bremsen, Beschleunigen, Lastwechsel. Gleichzeitig wird einem Fahrer durch Reduktion des Lenkaufwands mehr Komfort geboten: Beim Beschleunigen, Abbremsen sowie Lastwechseln ändert sich das Eigenlenkverhalten des Fahrzeugs. Der Fahrer muss diese Änderung des Eigenlenkverhaltens ohne Verwendung des erfindungsgemäßen Verfahrens bereits im Linearbereich kompensieren: Beim Beschleunigen durch nach innen lenken bei Lastwechseln bzw. beim Bremsen durch Öffnen der Lenkung. Durch den Eingriff eines erfindungsgemäßen Verfahrens wird diese Kompensation aktiv vorgenommen. Für den Fahrer reduziert sich der Lenkaufwand, das Fahrzeug bleibt aufgrund der vorsteuernden Stabilisierung insgesamt stabiler. Nachfolgende Stabilisierungseingriffe anderer Systeme sind weiterhin möglich, werden in diesen Fahrsituationen jedoch deutlich reduziert.

- Reduktion von Motoreingriffen bei Lastwechseln: Motor-Eingriffe werden in bekannter Weise u.a. dafür verwendet, um bei Lastwechseln durch relativ leichtes und aktiv gesteuertes Gas geben das Schleppmoment zu reduzieren und hierdurch ein destabilisierendes Giermoment zu vermeiden. Eine vom Fahrer durch Gaswegnahme gewünschte Reduktion der Geschwindigkeit ist eingeschränkt. Durch den Einsatz eines erfindungsgemäßen Verfahrens wird bei Lastwechseln vorsteuernd gegengelenkt. Der Motor-Eingriff kann reduziert werden und das Fahrzeug in verbesserter Weise entsprechend dem Fahrerwunsch verzögert werden.

- Reduktion von selektiven, radindividuellen Druckmodulationen, durch die beim Bremsen oder Beschleunigen in der Kurve ein kompensierendes Giermoment aufgebraucht wird. Alternativ oder ergänzend kann ein erfindungsgemäßes Verfahren versteuernd diese Stabilisierung übernehmen. Da ein erfindungsgemäßes Verfahren quasikontinuierlich wirkt, erfährt der Fahrer die Unterstützung vorteilhafterweise in allen Brems-/Antriebs- und Lastwechselsituationen.

Für ein erfindungsgemäßes Einspurmodell mit Längsdynamik-Berücksichtigung ergeben sich zwei vorteilhafte Einsatzfelder: Einerseits kann es zur Reduktion/Kompensation der Längsdynamik-Einflüsse auf die Querdynamik verwendet werden, wie vorstehend beschrieben. Andererseits kann es jedoch auch dazu genutzt werden, diese Abweichungen gerade nicht zu kompensieren, sondern als Fahrzeugeigenschaften zu erfassen, die gewollt unberührt gelassen werden sollen. Im letzteren Fall wird vorhandenen Systemen jedoch auf der Basis eines erfindungsgemäßen Verfahrens bereits vorab eine relativ zuverlässige Abschätzung über ein unmittelbar zu erwartendes Fahrzeugverhalten geliefert. Insofern kann hier von einer Sollwertbildung gesprochen werden. Diese Information kann dann u.a. auch dazu verwendet werden, eine drohende Instabilität vorzugsweise bei Überschreitung eines Schwellwertes unter nunmehr vorausschauendem Einsatz bekannter Stabilisierungssysteme abzuwenden.

Weitere Vorteile eines erfindungsgemäßen Verfahrens sowie eines entsprechenden Computerprogrammproduktes werden nachfolgend als Ausführungsbeispiele der Erfindung anhand der Zeichnung näher beschrieben. In der Zeichnung zeigen in schematischer Darstellung:

Figur 1:      ein ebenes Modell eines Kraftfahrzeugs in Form eines vereinfachten Zweispurmodells;

Figur 2:      ein ebenes Modell eines Kraftfahrzeugs in Form eines erweiterten Einspurmodells;

Figur 3a und 3b:   Diagramme zur Darstellung einer Verteilung von Radaufstandskräften und einer Längsmomentoder Längskraftverteilung LMV zwischen Vorder- und Hinterachse beim idealen Allrad-Betrieb über der Längsbeschleunigung;

Figur 4:      ein Diagramm zur Darstellung einer Verteilung der stationären Gierverstärkung über der Geschwindigkeit in Abhängigkeit von Längsbeschleunigung und Momentenverteilung nach dem erweiterten Einspurmodell bei verschiedenen Parameterwerten;

Figur 5:      eine Kennlinie zur Bestimmung eines geschwindigkeits -und schlupfabhängigen Faktors der Schräglaufsteifigkeit;

Figur 6:      ein Blockschaltbild zur Bestimmung einer von der Längsdynamik entkoppelten Quer-/Gierdynamik;

Figur 7:      ein Blockschaltbild zur Darstellung einer Möglichkeit einer Integration deserfindungsgemäßen Verfahrens in einem System nach dem Stand der Technik;

Figur 8:      Diagramme mit Simulationsergebnissen des linearen Einspurmodells mit und ohne Längsdynamik im Vergleich über drei Einsatzvariariten;

Figur 9:      Diagramme mit Simulationsergebnissen der die wesentlichen fahrdynamischen Größen Gierrate, Schwimmwinkel und Querbeschleunigung für die drei Varianten von Figur 8;

Figur 10:     ein Blockschaltbild eines weiteren Systems zur Bestimmung einer von der Längsdynamik entkoppelten Quer-/Gierdynamik als modellgestützte Vorsteuerung mit Proportionalverstärkung;

Figur 11:        ein Blockschaltbild eines weiteren Systems zur Bestimmung einer von der Längsdynamik entkoppelten Quer-/Gierdynamik als geregelte Vorsteuerung und

Figur 12:        ein Blockschaltbild eines weiteren Systems zur Bestimmung einer von der Längsdynamik.entkoppelten Quer-/Gierdynamik in Form einer Struktur mit zwei Freiheitsgraden.

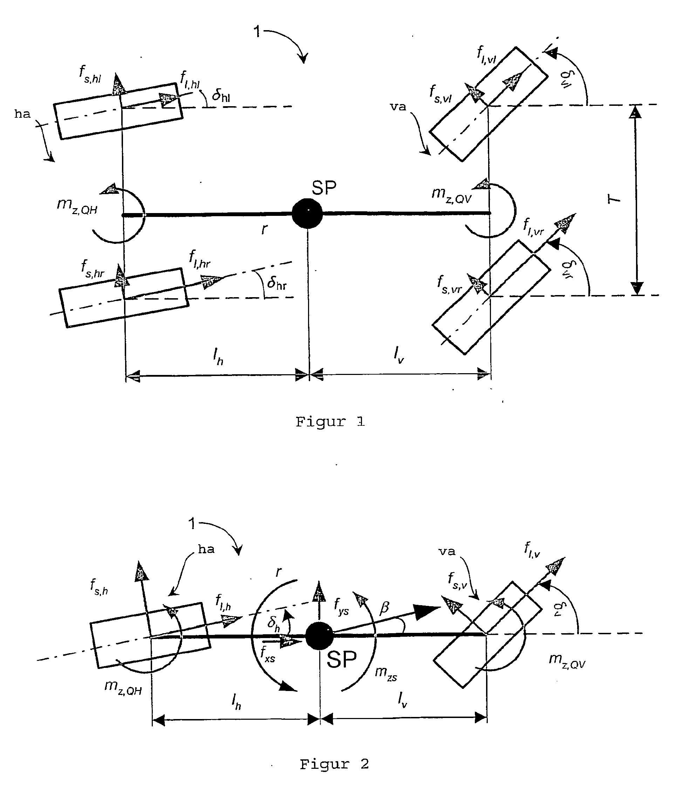

In Figur 1 ist ein ebenes Modell eines Kraftfahrzeugs 1 in Form eines Zweispurmodells dargestellt. Hierin sind Stellgiermomente eingezeichnet, die aufgrund asymmetrischer Antriebs-/Lastwechsel- und/oder Bremskraftverteilung an Vorder- und Hinterachse auftreten. Zur Vereinfachung des Modells wurde hier lediglich angenommen, dass eine Spurweite T einer Hinterachse ha und einer Vorderachse va gleich groß ist und dass ferner ein Schwerpunkt SP des Fahrzeugs 1 auf der Längsachse liegt.

Ein auf der Basis der Darstellung von Figur 1 aufgesetztes Zweispurmodell ist beispielsweise in der DE 40 30 704 A1 offenbart. Es übertrifft das bereits 1940 von R. Riekert und T. Schunck a.a.O. für die Untersuchung der Fahreigenschaften von Kraftfahrzeugen angegebene sog. Einspurmodell hinsichtlich seiner Modellgenauigkeit. Ein schneller Kompensationseingriff ist bei vertretbarem Parametrier- und/oder Rechenaufwand aber nur auf der Basis eines Einspurmodells erreichbar, so dass sich aus dem Zweispurmodell nach Figur 1 ein erweitertes Einspurmodell gemäß Figur 2 ableiten lässt.

So wird nachfolgend eine modellgestützte Vorsteuerung auf der Basis eines Einspurmodells unter Herleitung der hierfür wesentlichen mathematischen Formeln vorgestellt, das in Figur 2 mit eingeprägten Kräften und Momenten dargestellt ist. Hierin bezeichnen $f_{s,h/v}$ und $f_{l,v/h}$ die jeweiligen Reifenseitenkräfte und Reifenlängskräfte an der Vorder- und Hinterachse, die aufgrund des Kontakts zwischen den Reifen und der Fahrbahn auftreten. $m_{zs}$, $f_{xs}$, $f_{ys}$ bezeichnen von außen eingeprägte verallgemeinerte Störmomente und Störkräfte. Über diese lässt sich beispielsweise der Einfluss von Seitenwind oder einer $\mu$-Split-Bremsung auf das Fahrverhalten darstellen. Die eingeprägten Momente um die z- bzw. Hochachse $m_{z,QH}$ und $m_{z,QV}$ sind zusätzliche Giermomente an Vorder- bzw. Hinterachse, die durch asymmetrisches Antreiben oder Bremsen der Räder zwischen einer linken und rechten Fahrzeughälfte entstehen. Dies ist schematisch in Figur 1 dargestellt. Im Weiteren wird vereinfacht angenommen, dass Lenkwinkel der Räder an der Vorder- und Hinterachse $\delta_{vl} = \delta_{vr} =: \delta_v$ und $\delta_{hl} = \delta_{hr} =: \delta_h$ gleich groß sind. Damit werden die Stellgiermomente aufgrund asymmetrischer Antriebs-/Lastwechsel- und/oder Bremskraftverteilung an Vorder- und Hinterachse va, ha angegeben durch:

$$m_{z,QV} = \tfrac{T}{2}(f_{l,vr} - f_{l,vl})\cos\delta_v = \tfrac{T}{2}\Delta f_{l,v}\cos\delta_v$$
$$m_{z,QH} = \tfrac{T}{2}(f_{l,hr} - f_{l,hl})\cos\delta_h = \tfrac{T}{2}\Delta f_{l,h}\cos\delta_h \tag{1}$$

Die Längs-, Quer- und Gierdynamik des Einspurmodells eines Fahrzeugs mit Vorder- und Hinterradlenkung wird beschrieben durch

$$\begin{bmatrix} mv(\dot\beta + r) \\ m\dot v \\ i_z\dot r \end{bmatrix} = \begin{bmatrix} -\sin\beta & \cos\beta & 0 \\ \cos\beta & \sin\beta & 0 \\ 0 & 0 & 1 \end{bmatrix}\begin{bmatrix} f_x \\ f_y \\ m_z \end{bmatrix} \tag{2}$$

Hierbei sind $f_x$, $f_y$, $m_z$ die auf das Fahrzeug wirkenden eingeprägten Kräfte/Momente in fahrzeugfesten Koordinaten. Es gilt

$$\begin{bmatrix} f_x \\ f_y \\ m_z \end{bmatrix} = \begin{bmatrix} -\sin\delta_v & \cos\delta_v & -\sin\delta_h & \cos\delta_h \\ \cos\delta_v & \sin\delta_v & \cos\delta_h & \sin\delta_h \\ l_v\cos\delta_v & l_v\sin\delta_v & -l_h\cos\delta_h & -\sin\delta_h \end{bmatrix}\begin{bmatrix} f_{s,v} \\ f_{l,v} \\ f_{s,h} \\ f_{l,h} \end{bmatrix} + \begin{bmatrix} 0 \\ 0 \\ m_{z,QV} + m_{z,QH} \end{bmatrix} + \begin{bmatrix} f_{xs} \\ f_{ys} \\ m_{zs} \end{bmatrix} \tag{3}$$

oder insgesamt:

$$\begin{bmatrix} m\dot{v} \\ mv(\dot{\beta}+r) \\ i_z\dot{r} \end{bmatrix} = \begin{bmatrix} \sin(\beta-\delta_v) & \cos(\beta-\delta_v) & \sin(\beta-\delta_h) & \cos(\beta-\delta_h) \\ \cos(\beta-\delta_v) & -\sin(\beta-\delta_v) & \cos(\beta-\delta_h) & -\sin(\beta-\delta_h) \\ l_v\cos\delta_v & l_v\sin\delta_v & -l_h\cos\delta_h & -l_h\sin\delta_h \end{bmatrix} \begin{bmatrix} f_{s,v} \\ f_{l,v} \\ f_{s,h} \\ f_{l,h} \end{bmatrix} \qquad (4)$$

$$\begin{bmatrix} 0 \\ 0 \\ m_{z,QV}+m_{z,QH} \end{bmatrix} + \begin{bmatrix} f_{xs} \\ f_{ys} \\ m_{zs} \end{bmatrix}$$

Hierbei sind $f_{s,v/h}$ bzw. $f_{l,v/h}$ die auf Vorder- bzw. Hinterräder wirkenden Seiten- bzw. Längskräfte, für die vereinfacht folgende Zusammenhänge angenommen werden können:

$$f_{l,v} = (1-LMV)F_{ges}$$
$$f_{l,h} = LMV\,F_{ges}$$
$$f_{s,v} = c_v\alpha_v \qquad\qquad (5)$$
$$f_{s,h} = c_h\alpha_h$$
mit
$$F_{ges} = m\,a_x.$$

Für die Verwendung des linearen Einspurmodells unter Berücksichtigung der Längsdynamik ist es notwendig, die Längsbeschleunigung zu messen oder zu beobachten, sowie eine Längsmoment- oder Längskraftverteilung (LMV) zwischen Vorder- und Hinterachse zu beobachten. Nachfolgend bezeichnet die Größe LMV die wie folgt definierte Verhältnisgröße:

$$LMV = \frac{\text{an die Hinterachse übertragenes Brems-/Schlepp-/Antriebsmoment}}{\text{gesamtes Brems-/Schlepp-/Antriebsmoment}}$$

Nachfolgend werden die Möglichkeiten für die Ermittlung der Längsbeschleunigung und Längsmoment- oder Längskraftverteilung LMV zwischen Vorder- und Hinterachse erläutert:

Die Längsbeschleunigung lässt sich u.a. ermitteln durch

- Längsbeschleunigungssensor und/oder
- Antriebsstrangmodell (Gaspedalstellung, Gang, Motordrehzahl, Motormoment, ...) und Bremsdrücke (gemessen oder beobachtet) oder Fahrervordruck mit $c_p$-Werte (Umrechnungsfaktoren des Bremsdrucks auf die einzelnen Bremsen) und/oder
- Differenzieren der Fahrzeugreferenzgeschwindigkeit, wobei eine Kenntnis radindividueller Raddrehzahlen, Schlüpfe, etc. notwendig ist. ,

Die Längsmoment- oder Längskraftverteilung LMV zwischen Vorder- und Hinterachse lässt sich auf unterschiedliche Art und Weise ermitteln. Hierfür ist es u. U. sinnvoll zwischen vorder-, hinter- und allradgetriebenen (Permanent-Allrad, LV) Fahrzeugen sowie zwischen Antriebs-, Lastwechsel- und Bremsfall (Normal-, Regelbremsung) zu unterscheiden:

| | Antriebs-/Lastwechselfall | Bremsfall |
|---|---|---|
| Hinterradantrieb | LMV=1 | LMV aus Bremskraftverteilung zwischen vorne und hinten + Anteil Motorschleppmoment auf Hinterachse ha |
| Vorderradantrieb | LMV=0 | LMV aus Bremskraftverteilung zwischen vorne und hinten + Anteil Motorschleppmoment auf Vorderachse va |
| Allrad | LMV entsprechend Allradkonzept • Permanentallrad: LMV hat festen Wert z.B. LMV=0.6 (60% auf Hinterachse ha, 40% auf Vorderachse va) • LV ○Kupplung gesperrt ○Kopplung schlupft | LMV aus Bremskraftverteilung zwischen vorne und hinten + Anteile Motorschleppmoment auf Vorderachse va und Hinterachse ha entsprechend Allradkonzept |

Die Berechnung der Größe LMV kann nun beispielsweise anhand obiger Tabelle erfolgen oder durch direkte Messung/Schätzung der Längskräfte und/oder Längsmomente an Vorder- und Hinterachse. Nachfolgend wird eine hiervon abweichende bevorzugte Ausführungsform einer LMV-Schätzung dargestellt:

Der Zusammenhang für die Radlaständerungen ergibt sich vereinfacht aus dem stationären Momentengleichgewicht in y-Richtung um die Radaufstandspunkte vorne bzw. hinten bei stationärer Beschleunigung $a_x$ = const. und stationär $a_x$ = 0 unter Vernachlässigung der Nick- und Hubdynamik mit $l = l_v + l_h$ zu

$$0 = ma_x h + mgl_h - F_{zv}l$$
$$0 = ma_x h - mgl_v + F_{zh}l$$
$$0 = mgl_h - F_{zv0}l$$
$$0 = -mgl_v + F_{zh0}l \tag{6}$$

Die Auflösung der Gleichung liefert:

$$F_{zv} = F_{zv,0}(1 - \frac{a_x}{g}\frac{h}{l_h})$$
$$F_{zh} = F_{zh,0}(1 + \frac{a_x}{g}\frac{h}{l_v}) \tag{7}$$

Weiterhin gilt für die stationären Aufstandskräfte vorne und hinten bei $a_x$=0:

$$F_{zv,0} = \frac{l_h}{l}mg$$
$$F_{zh,0} = \frac{l_v}{l}mg \tag{8}$$

Es sind nun zwei Fälle zu unterscheiden:

1. Beim idealen Allrad (für das Einspurmodell definiert durch die Bedingung, dass mittlerer Schlupf $\lambda_v$ an der Vorderachse va und mittlerer Schlupf $\lambda_h$ an der Hinterachse ha gleich groß sind) gilt für die Längskraftverteilung:

$$LMV_{ID} = \frac{F_{l,h}}{F_{l,v} + F_{l,h}} = \frac{F_{z,h}}{mg} \tag{9}$$

9

Mit (7) und (8) folgt daraus

$$LMV_{ID} = \frac{\left(l_v + \frac{a_x}{g} h\right)}{l} \qquad (10)$$

2. Allgemein gilt für die Längskräfte:

$$F_{x,v} = \lambda_v c_{x,v} F_{z,v}$$
$$F_{x,h} = \lambda_h c_{x,h} F_{z,h} \qquad (11)$$

Für LMV gilt somit:

$$LMV = \frac{F_{x,h}}{F_{x,v} + F_{x,h}} = \frac{\lambda_h c_{x,h} F_{z,h}}{\lambda_v c_{x,v} F_{z,v} + \lambda_h c_{x,h} F_{z,h}} \qquad (12)$$

Nimmt man vereinfachend homogene Straßenbedingungen sowie homogene Längssteifigkeiten $c_x = c_{x,v} = c_{x,h}$ an, so folgt unter der Voraussetzung, dass $\lambda_v$ und $\lambda_h$ nicht gleichzeitig Null werden dürfen:

$$LMV = \frac{\lambda_h F_{z,h}}{\lambda_v F_{z,v} + \lambda_h F_{z,h}} = \frac{\lambda_h LMV_{ID}}{\lambda_v (1 - LMV_{ID}) + \lambda_h LMV_{ID}} \qquad (13)$$

Mit Gl. (10) folgt daraus allgemein:

$$LMV = \frac{(a_x h l^2 + g l_v) \lambda_h}{a_x h l^2 (\lambda_h - \lambda_v) + g(l_v \lambda_h + l_h \lambda_v)} \qquad (14)$$

Die Längsmoment- oder Längskraftverteilung LMV zwischen Vorder- und Hinterachse lässt sich somit in Abhängigkeit der Längsbeschleunigung und des mittleren Schlupfes an Vorder- und Hinterachse va, ha ermitteln. Bei hinterradgetriebenen Fahrzeugen gilt im Antriebs- und Schleppfall näherungsweise $\lambda_v = 0$ und damit LMV = 1. Bei vorderradgetriebenen Fahrzeugen gilt im Antriebs- und Schleppfall näherungsweise $\lambda_h = 0$ und damit LMV = 0. Beim idealen Allrad gilt $\lambda_v = \lambda_h$ und damit LMV = $LMV_{ID}$. Dieser Wert ergibt sich auch näherungsweise bei Fahrzeugen mit LV und geschlossener Kupplung ($\lambda_v$ und $\lambda_h$ sind näherungsweise, aber nicht exakt - gleich). Im Bremsfall ergibt sich unabhängig von der Antriebsart (unter der Voraussetzung, dass es keine Kopiereffekte über den Antriebsstrang gibt) ein Wert entsprechend der Auslegung der Bremsen. Es wird darauf hingewiesen, dass der Einfluss der Nick- und Hubdynamik auf die Quer- und Gierdynamik in den vorstehenden Gleichungen vernachlässigt wurde. Eine Berücksichtigung dieses Effekts kann durch eine vorgelagerte dynamische Filterung des Längsbeschleunigungssignals $a_x$ erfolgen, beispielsweise durch eine PT$_2$-Filterung.

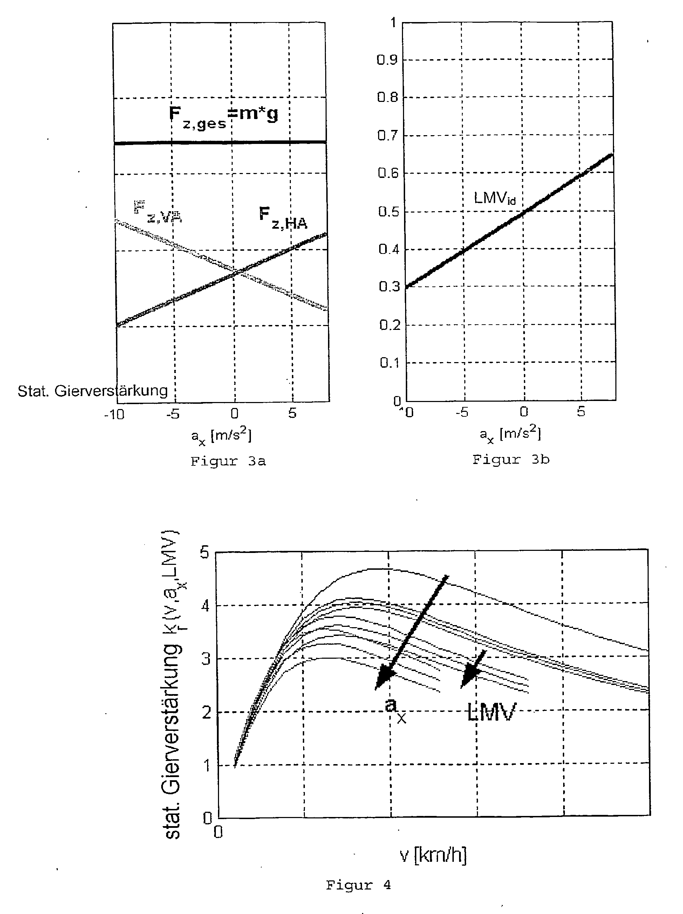

Figur 3a zeigt ein Diagramm zur Darstellung einer Verteilung von Radaufstandskräften über der Längsbeschleunigung $a_x$. Nur bei einer Längsbeschleunigung $a_x = 0$ verteilen sich die Radaufstandskräfte entsprechend der Gewichtsverteilung auf beide Achsen. Der Einfluss der Nick- und Hubdynamik auf die Quer- und Gierdynamik wurde bei der weiteren Herleitung der die Zustände mathematisch beschreibenden Gleichungen zur Vereinfachung vernachlässigt. Eine Längsmoment- oder Längskraftverteilung $LMV_{Id}$ zwischen Vorder- und Hinterachse beim idealen Allrad-Betrieb über der Längsbeschleunigung $a_x$ ist in Figur 3b dargestellt.

Als weitere, einer Modellierung vorangestellte Untersuchung zeigt Figur 4 ein Diagramm zur Darstellung einer Verteilung der stationären Gierverstärkung über der Geschwindigkeit in Abhängigkeit von Längsbeschleunigung und Momentenverteilung nach verschiedenen Modellansätzen. Die oberste Linie zeigt ein nach dem unkorrigierten Einspurmodell erhaltenes Ergebnis. Die weiteren Linien zeigen den Einfluss von Längsbeschleunigung $a_x$ und Längsmoment- oder Längskraftverteilung LMV als die die Längsdynamik charakterisierende Parameter auf das Einlenkverhalten über vier Größen der Längsbeschleunigung $a_x$ und drei Größen der Längskraftverteilung LMV (LMV=0, 0.5, 1).

Für eine Linearisierung der Zustandsgleichungen werden zunächst einige Annahmen getroffen:

- Die Räder vorne links und rechts bzw. hinten links und rechts werden jeweils zusammengefasst. Es wird also ein Einspurmodell zugrunde gelegt;
- Die Längsdynamik mit den Parametern v, $a_x$ und LMV wird für die Modellbildung als langsam gegenüber der Quer- und Gierdynamik angenommen. Unter dieser Voraussetzung können die Parameter v, $a_x$, LMV in dem vereinfachten Modell als variierende Parameter betrachtet werden, und müssen nicht als Zustände geführt werden;
- Der Einfluss des Rad-Schlupfs auf die Schräglaufsteifigkeiten wird in einem einfachen Ansatz nicht berücksichtigt.
- Weiterhin wird angenommen, dass die Schräglaufsteifigkeiten abhängig sind von den Radlaständerungen gemäß eines definierten Zusammenhangs.

Eine Linearisierung des Gleichungssystems nach Gleichung (4) um die Geradeausfahrt bei konstanter Fahrgeschwindigkeit, Längsbeschleunigung und Längsmomentverteilung führt auf:

$$\begin{bmatrix} m\dot{v} \\ mv(\dot{\beta}+r) \\ i_z\dot{r} \end{bmatrix} = \begin{bmatrix} \beta-\delta_v & 1 & \beta-\delta_h & 1 \\ 1 & \delta_v-\beta & 1 & \delta_h-\beta \\ l_v & l_v\delta & -l_h & -l_h\delta_h \end{bmatrix} \begin{bmatrix} f_{s,v} \\ f_{l,v} \\ f_{s,h} \\ f_{l,h} \end{bmatrix} + \begin{bmatrix} 0 \\ 0 \\ m_{z,QV}+m_{z,QH} \end{bmatrix} + \begin{bmatrix} f_{x,s} \\ f_{y,s} \\ m_{z,s} \end{bmatrix} \quad (15)$$

mit den linearisierten Längs- und Seitenkräften

$$\begin{aligned} f_{l,v} &= (1-LMV)F_{ges} \\ f_{l,h} &= LMV\, F_{ges} \\ f_{s,v} &= c_v(\delta_v - \beta - \tfrac{l_v r}{v}) \\ f_{s,h} &= c_h(\delta_h - \beta + \tfrac{l_h r}{v}) \end{aligned} \quad (16)$$

Weiterhin wird angenommen, dass die Schräglaufsteifigkeiten abhängig sind von den Radlaständerungen gemäß dem linearen Zusammenhang:

$$\begin{aligned} c_v &= k_{v,F_z} c_{v,0} \\ c_h &= k_{h,F_z} c_{h,0} \\ k_{v,F_z} &= \tfrac{F_{zv}}{F_{zv,0}} \\ k_{h,F_z} &= \tfrac{F_{zh}}{F_{zh,0}} \end{aligned} \quad (17)$$

Anstelle des linearen Zusammenhangs zwischen Schräglaufsteifigkeiten und Radlaständerungen kann eine Kennlinie verwendet werden. Eine solche Kennlinie kann beispielsweise in einem Fahrversuch ermittelt oder aus gemessenen Reifendaten erzeugt werden. Hilfreich kann hierbei auch der Einsatz eines nichtlinearen Reifenmodells sein, wie z.B. Pacejkas Magic Formula.

Der Zusammenhang für die Radlaständerungen ergibt sich vereinfacht aus dem stationären Momentengleichgewicht in y-Richtung um die Radaufstandspunkte vorne bzw. hinten unter Vernachlässigung der Nick- und Hubdynamik, siehe Gleichungen (6) und (7). Damit werden die Schräglaufsteifigkeiten definiert als:

$$c_v = c_{v,0}\left(1 - \frac{a_x}{g}\frac{h}{l_h}\right)$$
$$c_h = c_{h,0}\left(1 + \frac{a_x}{g}\frac{h}{l_v}\right)$$

$$(18)$$

Weiter kann es sinnvoll sein, zusätzlich zur Berücksichtigung des Einflusses der Radaufstandskräfte, die Schlupfabhängigkeit der Schräglaufsteifigkeiten zu berücksichtigen:

$$c_v = k_{v,\lambda}k_{v,F_z}c_{v,0}$$
$$c_h = k_{h,\lambda}k_{h,F_z}c_{h,0}$$

$$(19)$$

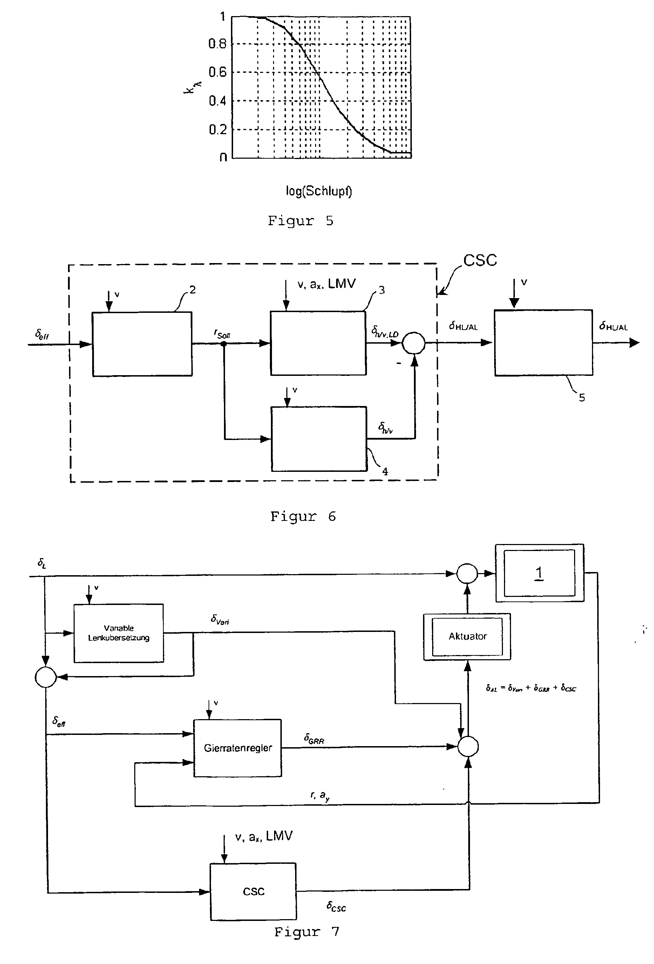

Auch hierbei können entsprechende Kennlinien durch Reifenmodelle bzw. im Fahrversuch ermittelt werden, siehe beispielsweise die Abbildung von Figur 5. Zusätzliche Signale sind dann der jeweils mittlere Schlupf $\lambda_v$, $\lambda_h$ an Vorder- und Hinterachse va, ha zu berücksichtigen.

Obige Annahmen für die Berechnung der Schräglaufsteifigkeiten beruhen auf quasistationären Betrachtungen. Der dynamische Einfluss der Hub-, Nick- und Wankdynamik wurde hierbei vernachlässigt. Diese Effekte können, wie auch die vorstehend genannten Erweiterungen des mathematischen Modells, in einem detaillierteren Ansatz für die Berechnung der Schräglaufsteifigkeiten berücksichtigt werden.

Geht man weiter davon aus, dass die Längsdynamik langsam gegenüber der Quer- und Gierdynamik ist, ergibt sich die folgende Zustandsraumdarstellung:

$$
\begin{bmatrix} \dot{\beta} \\ \dot{r} \end{bmatrix} = \begin{bmatrix} -\frac{c_h+c_v+F_{gcs}}{mv} & \frac{c_h l_h - c_v l_v}{mv^2}-1 \\ \frac{c_h l_h - c_v l_v}{i_z} & -\frac{c_h l_h^2 + c_v l_v^2}{i_z v} \end{bmatrix}\begin{bmatrix} \beta \\ r \end{bmatrix} + \begin{bmatrix} \frac{c_v+F_{L,v}}{mv} & \frac{c_h+F_{L,h}}{mv} \\ \frac{(c_v+F_{L,v})l_v}{i_z} & -\frac{l_h(c_h+F_{L,h})}{i_z} \end{bmatrix}\begin{bmatrix} \delta_v \\ \delta_h \end{bmatrix} + \begin{bmatrix} 0 & 0 \\ \frac{1}{i_z} & \frac{1}{i_z} \end{bmatrix}\begin{bmatrix} m_{z,QV} \\ m_{z,QH} \end{bmatrix}
$$
$$
+ \begin{bmatrix} \frac{1}{mv} & 0 \\ 0 & \frac{1}{i_z} \end{bmatrix}\begin{bmatrix} f_{y,s} \\ m_{z,s} \end{bmatrix}
$$

$$(20)$$

oder

$$
\begin{bmatrix} \dot{\beta} \\ \dot{r} \end{bmatrix} = \begin{bmatrix} -\frac{c_h+c_v+F_{gcs}}{mv} & \frac{c_h l_h - c_v l_v}{mv^2}-1 \\ \frac{c_h l_h - c_v l_v}{i_z} & -\frac{c_h l_h^2 + c_v l_v^2}{i_z v} \end{bmatrix}\begin{bmatrix} \beta \\ r \end{bmatrix} + \begin{bmatrix} \frac{c_v+F_{gcs}(1-LMV)}{mv} & \frac{c_h+F_{gcs}LMV}{mv} \\ \frac{(c_v+F_{gcs}(1-LMV))l_v}{i_z} & -\frac{l_h(c_h+F_{gcs}LMV)}{i_z} \end{bmatrix}\begin{bmatrix} \delta_v \\ \delta_h \end{bmatrix} + \begin{bmatrix} 0 & 0 \\ \frac{1}{i_z} & \frac{1}{i_z} \end{bmatrix}\begin{bmatrix} m_{z,QV} \\ m_{z,QH} \end{bmatrix}
$$
$$
+ \begin{bmatrix} \frac{1}{mv} & 0 \\ 0 & \frac{1}{i_z} \end{bmatrix}\begin{bmatrix} f_{y,s} \\ m_{z,s} \end{bmatrix}
$$

$$(21)$$

Letztere Annahme bedeutet, dass die Längsdynamik von der Quer- und Gierdynamik entkoppelt werden kann. Damit kann auf die Berücksichtigung der Differentialgleichung für die Längsdynamik verzichtet werden. Die längsdynamischen Größen v, $a_x$ und LMV werden nachfolgend als variierende, langsam veränderliche Parameter interpretiert. Damit kann das Einspurmodell mit Längsdynamik als parametrisches lineares zeitinvariantes System betrachtet werden, also als parametrisches LTI-System, als Linear Parameter Varying (LPV-) System oder als System mit variierenden Parametern.

Es ist besonders darauf hinzuweisen, dass letztere Annahme bei genauer Betrachtung eigentlich nicht zulässig ist, da sich die Längsdynamik insbesondere auf Beschleunigungsebene sehr schnell ändern kann und dies sehr wohl Einfluss auf die Quer- und Gierdynamik hat. Es wird hier jedoch vereinfachend von dieser Annahme ausgegangen, um ein möglichst einfaches Modell ableiten zu können. Der transiente Einfluss der Längsdynamikänderung auf die Quer- und Gierdynamik muss deswegen mit einem vollständigen nichtlinearen (Simulations-)Modell bzw. anhand von Fahrversuchen untersucht werden, um die Zulässigkeit der vorgenommenen Vereinfachungen abzusichern.

Insgesamt ergibt sich im Zustandsraum

$$\begin{bmatrix} \dot{\beta} \\ \dot{r} \end{bmatrix} = \begin{bmatrix} a_{11} & a_{12} \\ a_{21} & a_{22} \end{bmatrix} \begin{bmatrix} \beta \\ r \end{bmatrix} + \begin{bmatrix} b_{11} & b_{12} \\ b_{21} & b_{22} \end{bmatrix} \begin{bmatrix} \delta_v \\ \delta_h \end{bmatrix} + \begin{bmatrix} 0 & 0 \\ \frac{1}{i_z} & \frac{1}{i_z} \end{bmatrix} \begin{bmatrix} m_{z,QV} \\ m_{z,QH} \end{bmatrix} + \begin{bmatrix} \frac{1}{mv} & 0 \\ 0 & \frac{1}{i_z} \end{bmatrix} \begin{bmatrix} f_{y,s} \\ m_{z,s} \end{bmatrix} \qquad (22)$$

mit

$$A = \begin{bmatrix} a_{11} & a_{12} \\ a_{21} & a_{22} \end{bmatrix}, B_\delta = \begin{bmatrix} b_{11} & b_{12} \\ b_{21} & b_{22} \end{bmatrix}, B_{QMV} = \begin{bmatrix} 0 & 0 \\ \frac{1}{i_z} & \frac{1}{i_z} \end{bmatrix}, B_S = \begin{bmatrix} \frac{1}{mv} & 0 \\ 0 & \frac{1}{i_z} \end{bmatrix}$$

und

$$a_{11} = -\frac{(c_{h0}+c_{v0})gl_h l_v + a_x(h(c_{h0}l_h - c_{v0}l_v)+mgl_h l_v)}{mgl_h l_v v}$$

$$a_{12} = \frac{gl_h l_v(c_{h0}l_h - c_{v0}l_v) + a_x h(c_{h0}l_h^2 + c_{v0}l_v^2)}{mgl_h l_v v^2} - 1$$

$$a_{21} = \frac{gl_h l_v(c_{h0}l_h - c_{v0}l_v) + a_x h(c_{h0}l_h^2 + c_{v0}l_v^2)}{i_z gl_h l_v}$$

$$a_{22} = \frac{a_x h(c_{v0}l_v^3 - c_{h0}l_h^3) - gl_h l_v(c_{h0}l_h^2 + c_{v0}l_v^2)}{i_z gl_h l_v v}$$

$$b_{11} = \frac{c_{v0}gl_h - a_x(c_{v0}h + mgl_h(LMV-1))}{mgl_h v} \qquad (23)$$

$$b_{12} = \frac{c_{h0}gl_v + a_x(c_{h0}h + mgl_v LMV)}{mgl_v v}$$

$$b_{21} = \frac{l_v(c_{v0}gl_h - a_x(c_{v0}h + mgl_h(LMV-1)))}{gl_h i_z}$$

$$b_{22} = -\frac{l_h(c_{h0}gl_v + a_x(c_{h0}h + mgl_v LMV))}{gl_v i_z}$$

Die Systemmatrix, d.h. die $a_{ij}$ in diesem Modell und damit die Systempole, ist nicht abhängig von der Längsmomentverteilung LMV, jedoch von der insgesamt umgesetzten Antriebskraft $F_{ges} = m\,a_x$, sowie der Änderungen der Schräglaufsteifigkeiten in Abhängigkeit der Radlaständerung und/oder des Schlupfes.

Nachfolgend werden lineare Modellgleichungen in Übertragungsform angegeben. Lineare Übertragungsfunktionen lassen sich aus der Zustandsraumdarstellung in Gl. (22) entsprechend für den Schwimmwinkel und die Gierrate ableiten. Das charakteristische Polynom lautet:

$$p(s) = \det(sI - A)$$
$$= i_z \cdot s \cdot v \cdot (F_{ges} + m \cdot s \cdot v) + c_v \cdot (i_z \cdot s \cdot v + l_v \cdot (F_{ges} \cdot l_v + m \cdot (l_v \cdot s - v) \cdot v)) + \qquad (24)$$
$$c_h \cdot (c_v \cdot l^2 + i_z \cdot s \cdot v + l_h \cdot (F_{ges} \cdot l_h + m \cdot v \cdot (l_h \cdot s + v)))$$

Die Übertragungsfunktionen von Vorderradlenkwinkel, Hinterradlenkwinkel und Giermoment zur Gierrate sind:

$$G_{rv}(s) = \frac{r}{\delta_v} = \frac{(c_v + F_{ges}(1-LMV)) \cdot v \cdot (c_h \cdot l + l_v \cdot (F_{ges} + m \cdot s \cdot v))}{p(s)} \tag{25}$$

$$G_{rh}(s) = \frac{r}{\delta_h} = \frac{-((c_h + F_{ges} \cdot LMV) \cdot v \cdot (c_v \cdot l + l_h \cdot (F_{ges} + m \cdot s \cdot v)))}{p(s)} \tag{26}$$

$$G_{rmz}(s) = \frac{r}{m_{z,S}} = \frac{r}{m_{z,QV}} = \frac{r}{m_{z,QH}} = \frac{v \cdot (c_h + c_v + F_{ges} + m \cdot s \cdot v)}{p(s)} \tag{27}$$

Die Übertragungsfunktionen des herkömmlichen linearen Einspurmodells, also des Einspurmodells ohne Längsdynamik, die durch eine Null im Index gekennzeichnet ist, ergeben sich aus den vorstehenden Gleichungen durch Nullsetzung von $a_x$. Dies ist gleich bedeutend mit $F_{ges}$=0 und $c_v = c_{v0}$, $c_h = c_{h0}$, also

$$G_{rv0}(s, v) = G_{rv}(s, v, a_x = 0) \tag{25a}$$
$$\vdots$$

Die stationären Verstärkungsfaktoren geben die stationären Zusammenhänge zwischen Eingangs- bzw. Störgrößen (Lenkwinkel, Gierstörmoment, etc.) und Fahrdynamikgrößen wieder und lassen sich aus obigen Gleichungen (24)-(27) durch Nullsetzen des Laplace-Operators (s=0) ableiten:

$$p(0) = c_v l_v (F_{ges} l_v - mv^2) + c_h (c_v l^2 + l_h (F_{ges} l_h + mv^2)) \tag{28}$$

$$k_{rv} := G_{rv,ss} = \left.\frac{r}{\delta_v}\right|_{ss} = \frac{(c_v + F_{ges}(1-LMV))(F_{ges} l_v + c_h l)v}{p(0)} \tag{29}$$

$$k_{rh} := G_{rh,ss} = \left.\frac{r}{\delta_h}\right|_{ss} = -\frac{(c_h + F_{ges} LMV)(F_{ges} l_h + c_v l)v}{p(0)} \tag{30}$$

$$k_{rmz} := G_{rmz,ss} = \left.\frac{r}{m_{z,QV/QH}}\right|_{ss} = \frac{(c_v + c_h + F_{ges} l)v}{p(0)} \tag{31}$$

Für $a_x$=0, s=0 ergeben sich die Verstärkungsfaktoren des konventionellen Einspurmodells:

$$k_{rv0} := G_{rv0,ss} = \left.\frac{r}{\delta_v}\right|_{ss} = \frac{c_v c_h l v}{c_h c_v l^2 + (c_h l_h - c_v l_v)mv^2} \tag{32}$$

$$k_{rh0} := G_{rh0,ss} = \left.\frac{\dot{r}}{\delta_h}\right|_{ss} = -\frac{c_h c_v lv}{c_h c_v l^2 + (c_h l_h - c_v l_v)mv^2} = -k_{rv0} \qquad (33)$$

$$k_{rmz0} := G_{rmz0,ss} = \left.\frac{\dot{r}}{m_{z,QV/QH}}\right|_{ss} = \frac{(c_v + c_h)v}{c_h c_v l^2 + (c_h l_h - c_v l_v)mv^2} \qquad (34)$$

Die Entkopplung der Quer- und Gierdynamik von der Längsdynamik wird erfindungsgemäß durch eine modellgestützte Vorsteuerung realisiert, deren mathematische Basis vorstehend mit den Erläuterungen zu Gleichung (21) angegeben worden ist. Eine mögliche Struktur für eine Realisierung mit aktiver Vorderradlenkung AL und/oder aktiver Hinterradlenkung HL zeigt Figur 6. Hierbei wird aus einer aktuellen Geschwindigkeit v und einem effektiven Lenkwinkel $\delta_{eff}$, z.B. einem vom Fahrer vorgegebenen Lenkwinkel, als Eingangssignale eine gewünschte Sollgierrate $r_{soll}$ berechnet, die unabhängig von einer Längsbeschleunigung aus einem herkömmlichen Einspurmodell 2 stammt. Am vorteilhaftesten ist hierbei die Verwendung von Stationärwerten und nicht des ESM selbst. Auf die Verwendung eines separaten Gierratensignals und/oder Querbeschleunigungssignals kann also in dem gewählten Ansatz vorteilhafterweise verzichtet werden.

Unter dem Begriff der modellgestützten Vorsteuerung bzw. Stabilisierungsfunktion wird im Hinblick auf das vorliegende Ausführungsbeispiel detailliert eine Funktion verstanden, die auf zwei Fahrzeugmodellen basiert: einem herkömmlichen Einspurmodell und einem Einspurmodell unter Berücksichtigung der Längsdynamik. Der Ausgang der Funktion wird zur Erzeugung eines Zusatz-Giermoments durch mindestens einen Aktuator verwendet, der für aktive Vorderradlenkung AL, aktive Hinterradlenkung HL, aktive Quermomentenverteilung an der Vorderachse QV und/oder aktive Quermomentenverteilung an der Hinterachse QH zuständig ist. Mit Hilfe der Abweichungen der beiden Einspur-modelle voneinander bei $a_x \neq 0$ wird das Zusatz-Giermoment in Form eines Zusatz-Lenkwinkels (AL, HL) und/oder Zusatz-Raddifferenzmoments (QV, QH) gebildet. Dabei werden hier ausschließlich Fahrervorgaben in Form von Lenkwinkel und/oder Gaspedalstellung und/oder Bremsdruck, sowie längsdynamische Fahrzeuggrößen in Form von Längs-beschleunigung $a_x$, Geschwindigkeit v, Schlupf $\lambda_v$ an der Vorderachse va und Schlupf $\lambda_h$ an der Hinterachse ha und/oder Brems- und Antriebsmoments verwendet. Querdynamische Größen werden also mit Ausnahme der Gierrate für die Bestimmung des mittleren Schlupfes an Vorder- und Hinterachse va, ha keine verwendet.

Unabhängig von einer jeweiligen internen Reglerstruktur wird auf mindestens drei Eingangsgrößen aufbauend über ein auf einer Datenverarbeitungsanlage etc. geladenen Computerprogramm-Produkt eine Aktuator-Steuergröße ausgegeben, die sich nach den je Anwendungsfall zur Verfügung stehenden Aktuatoren ausgeführte Stabilisierungssysteme richtet. Prinzipiell ist es nach dem vorstehend im mathematischen Detail angegebenen Ansatz und dem zugrundeliegenden Modell auch möglich, mehrere Ausgangssignale für verschiedenartige Aktuatoren bereitzustellen. Im vorliegenden Ausführungsbeispiel soll jedoch nur eine aktive Vorderrad-Lenkung AL mit ihrem Aktuator erfindungsgemäß über eine Sollgröße $\delta_{HL/AL}$ angesteuert werden.

Aus $r_{soll}$ werden dann in einem zweiten Schritt über ein inverse erweitertes Einspurmodell mit Längsdynamik 3, dem als zusätzliche Eingangswerte die Längsbeschleunigung $a_x$ zugeführt wird, und über ein inverses einfaches Einspurmodell 4 zwei Lenkwinkel $\delta_{h/v,LD}$ und $\delta_{h/v}$ berechnet. In diese Berechnung gehen in der vorliegenden Ausführungsform neben der aktuellen Geschwindigkeit v noch die Längsbeschleunigung $a_x$ und die Längsmoment- oder Längskraftverteilung LMV ein, wobei die Längsmoment- oder Längskraftverteilung LMV aus der Längsbeschleunigung $a_x$ und Werten für den Schlupf $\lambda_v$, $\lambda_h$ an Vorder- und Hinterachse va, ha berechnet wird.

Die Differenz der beiden Lenkwinkel $\delta_{h/v,LD}$ und $\delta_{h/v}$ wird als Sollgröße $\delta_{HL/AL}$ für einen Aktuator an der Vorderachse va oder der Hinterachse ha in Abhängigkeit davon verwendet, ob eine Realisierung mit aktiver Vorderradlenkung AL oder aktiver Hinterradlenkung HL vorliegt. In jedem der genannten Anwendungsfälle wird die Sollgröße $\delta_{HL/AL}$ dem vom Fahrer vorgegebenen Lenkwinkel $\delta_{eff}$ überlagert einem entsprechenden Vorderrad- und/oder Hinterrad-Aktuator vorgegeben, je nachdem, ob eine aktive Vorderrad- und/oder aktive Hinterradlenkung realisiert ist. Ergänzend ist an dieser Stelle anzumerken, dass sich die Struktur in dem Fall, dass lediglich eine bekannte Vorderradlenkung eingesetzt wird, wesentlich dadurch vereinfacht, dass auf eine aufeinander folgende Anwendung des herkömmlichen Einspurmodells 2 und des inversen Einspurmodells 4 verzichtet werden kann. Es kann in diesem Fall mithin an dem die Struktur abschließenden Summationspunkt direkt $\delta_{h/v} = \delta_{eff}$ gesetzt werden, der Block 4 mit dem inversen Einspurmodell entfällt in diesem Spezialfall.

Eine Realisierung einer Stabilisierung nach dem vorstehend beschriebenen Verfahren unter Verwendung von QV- und/oder QH-Aktuatoren kann in analoger Weise erfolgen.

Im Fall einer aktiven Vorderrad-Lenkung können für das Einspurmodell bzw. inverse Einspurmodell hierbei die Übertragungsfunktionen zwischen Vorderradlenkwinkel und Gierrate entsprechend Gleichung (25a) $G_{rv0}(s,v)$ verwendet werden, für das Einspurmodell mit Längsdynamik die Übertragungsfunktion zwischen Vorderradlenkwinkel und Gierrate unter Berücksichtigung der Längsdynamik $G_{rv}(s, v, a_x, LMV)$ entsprechend Gleichung (25).

Entsprechend werden im Fall einer aktiven Hinterrad-Lenkung die Übertragungsfunktionen zwischen Hinterradlenkwinkel und Gierrate ohne bzw. mit Längsdynamik $G_{rh0}(s,v)$, $G_{rh}(s, v, a_x, LMV)$ verwendet. Die Definition und Herleitung der betreffenden Übertragungsfunktionen sowie ihrer Stationärwerte wurde vorstehend im Bereich der Gleichungen (24) - (34) vorgenommen.

Der für eine Entkopplung der Querdynamik von der Längsdynamik notwendige AL- bzw. HL-Zusatzlenkwinkel berechnet sich dann zu:

$$\delta_{AL} = \left( \frac{G_{rv0}(s,v)}{G_{rv}(s,v,a_x,LMV)} - 1 \right) \delta_{eff} \qquad (35)$$

bzw.

$$\delta_{HL} = \left( \frac{G_{rv0}(s,v)}{G_{rh}(s,v,a_x,LMV)} - \frac{G_{rv0}(s,v)}{G_{rh0}(s,v)} \right) \delta_{eff} \qquad (36)$$

Anstelle der Übertragungsfunktionen ist es vorteilhaft die jeweiligen stationären Verstärkungsfaktoren entsprechend Gln. (28)-(34) zu verwenden. Der Sollwert für den AL- bzw. HL-Aktuator ergibt sich dann zu

$$\delta_{AL} = \left( \frac{k_{rv0}(v)}{k_{rv}(v,a_x,LMV)} - 1 \right) \delta_{eff} \qquad (37)$$

bzw.

$$\delta_{HL} = -\left( \frac{k_{rh0}(v)}{k_{rh}(v,a_x,LMV)} - 1 \right) \delta_{eff} \qquad (38)$$

Damit sind auf der Basis der in Figur 6 angegebenen Struktur vier Realisierungen möglich, jeweils für aktive Vorderradlenkung AL und aktive Hinterradlenkung im dynamischen und im statischen Fall. In tabellarischer Zusammenfassung:

| | Einspurmodell | Inverses Einspurmodell mit Längsdynamik | Inverses Einspurmodell | Einspurmodell mit Längsdynamik |
|---|---|---|---|---|
| VL dynamisch | $G_{rv0}(s, v)$ | $\dfrac{1}{G_{rv}(s,v,a_x,LMV)}$ | $\dfrac{1}{G_{rv0}(s,v)}$ | $G_{rv}(s,v,a_x,LMV)$ |
| VL statisch | $k_{rv0}(s, v)$ | $\dfrac{1}{k_{rv}(s,v,a_x,LMV)}$ | $\dfrac{1}{k_{rv0}(s,v)}$ | $k_{rv}(s,v,a_x,LMV)$ |

(fortgesetzt)

|  | Einspurmodell | Inverses Einspurmodell mit Längsdynamik | Inverses Einspurmodell | Einspurmodell mit Längsdynamik |
|---|---|---|---|---|
| HL dynamisch | $G_{rv0}(s, v)$ | $\dfrac{1}{G_{rh}(s, v, a_x, LMV)}$ | $\dfrac{1}{G_{rh0}(s, v)}$ | $G_{rh}(s,v,a_x,LMV)$ |
| HL statisch | $k_{rv0}(s,v)$ | $\dfrac{1}{k_{rh}(s, v, a_x, LMV)}$ | $\dfrac{1}{k_{rh0}(s, v)}$ | $k_{rh}(s,v,a_x,LMV)$ |

Der Vorsteuereingriff kann kontinuierlich oder auch situationsabhängig durchgeführt werden, wie in der Abbildung von Figur 6 durch eine geschwindigkeitsabhängige Ein-/Ausschaltfunktion in Block 5 angedeutet. Insbesondere kann, nachdem eine Lastwechselsituation erkannt wurde, die modellgestützte Vorsteuerung aktiviert werden.

Nicht weiter dargestellt ist eine analoge Realisierung mit Aktuatoren zur Quermomenten-Verteilung an Vorder- und/oder Hinterachse, QV- und/oder QH-Aktuatoren. Hierbei werden aus $r_{soll}$ Giermomente abgeleitet, die umgerechnet werden auf ein entsprechendes von QH/QV-Aktuatoren zu stellendes Moment $M_{zQV/QH}$.

Sinnvoll ist es zudem, die vorstehend beschriebenen Vorsteuerungen gemeinsam mit einem Gierratenregler zu betreiben. Hierzu zeigt Figur 7 ein Blockschaltbild zur Darstellung einer beispielhaften Möglichkeit einer Integration des erfindungsgemäßen Verfahrens nach Figur 6 in einem System nach dem Stand der Technik, die eine Integration der mit Aktivlenkung AL realisierten Längsdynamikkompensation (CSC := Cornering Steering Control), einer AL-Gierratenregelung und einer variablen Lenkübersetzung schafft. Mit variabler Lenkübersetzung ergibt sich der umzusetzende effektive Lenkwinkel $\delta_{eff} = \delta_L + \delta_{vari}$, sonst gilt $\delta_{eff} = \delta_L$, es entspricht dann also der umzusetzende effektive Lenkwinkel $\delta_{eff}$ dem Fahrerlenkwinkel $\delta_L$.

Ergänzend ist anzumerken, dass aktive Vorderradlenkung AL und aktive Hinterradlenkung HL auch mit einem steer-by-wire-Ansatz technisch realisierbar sind.

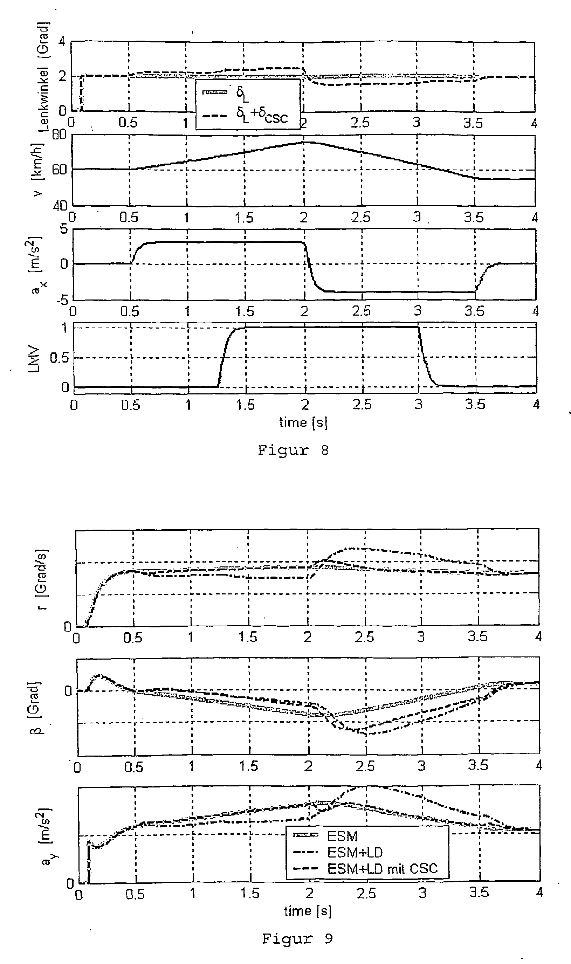

Die Diagramme der Figur 8 und Figur 9 zeigen Simulationsergebnisse mit dem linearen Einspurmodell ESM mit und ohne Längsdynamik LD in direkter Gegenüberstellung. Verglichen werden drei Varianten:

    1. lineares ESM ohne Längsdynamik
    2. lineares ESM mit Längsdynamik LD
    3. lineares ESM mit Längsdynamik LD und Längsdynamikkompensation.

Ein Fahrer gibt einen Lenkradwinkelsprung nach 0,1 s vor. Nach 0.5 s wird mit $a_x > 0$ m/s$^2$ beschleunigt und nach 2 s wird ein Lastwechsel mit $a_x < 0$ m/s$^2$ eingeleitet. Weiterhin wird die Antriebs-/Bremskraft zwischen Vorder- und Hinterachse Verteilt. Zu Beginn, also zwischen 0 s < t < 1,25 s, und am Ende bei t > 3 s wird die gesamte Antriebskraft über die Vorderränder abgesetzt. Hier gilt also für die Längsmöment- oder Längskraftverteilung LMV=0. Im Zeitraum 1,5 s < t < 3 s wird die Antriebs- oder Bremskraft über die Hinterachse abgesetzt, so dass LMV=1 gilt. Figur 8 zeigt hierzu den zeitlichen Verlauf der für die Definition des Fahrmanövers wesentlichen Größen Lenkwinkel $\delta_L$, Geschwindigkeit v, Längsbeschleunigung $a_x$ und Längsmoment- oder Längskraftverteilung LMV. In dem obersten Diagramm ist der Verlauf des Lenkwinkels $\delta_L$, wie er sich rein nach dem Einspurmodell ergeben würde, dem nach einem erfindungsgemäßen Modell errechneten Verlauf des Lenkwinkels $\delta_L+\delta_{CSC}$ gegenübergestellt.

Figur 9 zeigt die wesentlichen fahrdynamischen Größen Gierrate r, Schwimmwinkel $\beta$ und Querbeschleunigung $a_y$ für die folgenden drei Varianten:

    1. Einspurmodell ESM
    2. Einspurmodell unter Berücksichtung des Einflusses der Längs- auf die Querdyriamik ESM+LD und
    3. Einspurmodell unter Berücksichtung des Querdynamikeinflusses mit einer erfindungsgemäßen Kompensation dieses Einflusses ESM+LD mit CSC.

Der Einfluss der Längsdynamik LD auf den Verlauf von Gierrate r, Schwimmwinkel $\beta$ und Querbeschleunigung $a_y$ ist deutlich erkennbar. Durch die AL-Kompensation der Längsdynamik kann der Einfluss der Längsdynamik LD auf die Gierrate sehr gut kompensiert werden, wie in Figur 8 durch die Annäherung der kompensierten Regelkurve an die Kurve nach dem reinen Einspurmodell gezeigt. Durch den Vorsteuerungseingriff wird der Gierratenverlauf also wesentlich an den des linearen Einspurmodells angepasst, d.h. die auch real vorhandenen Einflüsse der Längs- auf die Querdynamik werden im Wesentlichen kompensiert..

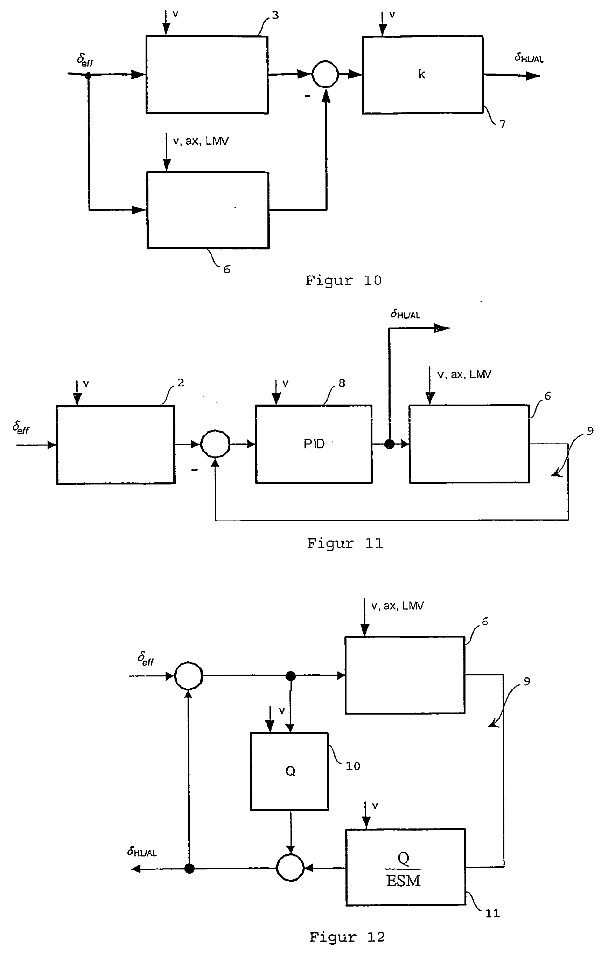

Weitere in der Regelungstechnik bekannte Strukturen für eine vergleichbar vorteilhafte Umsetzung eines erfindungsgemäßen Verfahren sind in den Figuren 10 bis 12 dargestellt. Durch das zusätzliche Eingangssignal v an den Funktionsblöcken wird in diesen Figuren auf eine generelle Möglichkeit einer geschwindigkeitsabhängigen Ausbildung einer jeweiligen Funktion hingewiesen, ohne dass darauf nachfolgend noch weiter eingegangen wird:

Figur 10 stellt als Alternative zu der Abbildung von Figur 6 ein Blockschaltbild eines weiteren Systems zur Bestimmung einer von der Längsdynamik entkoppelten Quer/Gierdynamik als modellgestützte Vorsteuerung mit Proportionalverstärkung dar. Hierin wird wiederum ein effektiver Lenkwinkel $\delta_{eff}$. z.B. ein vom Fahrer vorgegebener Lenkwinkel als Eingangssignal, einem herkömmlichen Einspurmodell 2 und einem erweiterten Einspurmodell mit Längsdynamik 6 zugeführt, wobei dem Modell 6 neben der Geschwindigkeit v als zusätzliche Eingangswerte die Längsbeschleunigung $a_x$ und die Längsmomenten- oder Längskraftverteilung LMV gegeben werden. Ein Differenzsignal, das sich aus den Ausgangssignalen der beiden Blöcke 2 und 6 ergibt, wird nachfolgend in Abhängigkeit von der Geschwindigkeit v in Block 7 einer Proportional- oder PID-Verstärkung unterzogen und als modifizierte Lenkwinkelvorgabe $\delta_{HL/AL}$ an entsprechende Aktuatoren ausgegeben.

Figur 11 zeigt ein Blockschaltbild eines weiteren Systems zur Bestimmung einer von der Längsdynamik entkoppelten Quer-/Gierdynamik als geregelte Vorsteuerung als Alternative zu den Ausführungsformen von Figur 6 und 10. Hierbei handelt es sich um eine geregelte Vorsteuerung, die sich an die Anwendung eines Einspurmodells in Block 2 mit einem PID-Regler in Block 8 und Block 6 mit dem Einspurmodell mit Längsdynamik in einer Rückkopplungsschleife 9 anschließt. Das als modifizierte Lenkwinkelvorgabe $\delta_{HL/AL}$ an entsprechende Aktuatoren auszugegebende Ausgangssignal wird zwischen dem PID-Regler 8 und dem Block 6 mit dem Einspurmodell mit Längsdynamik 6 aus der Rückkopplungsschleife 9 ausgekoppelt.

Figur 12 ein Blockschaltbild eines weiteren Systems zur Bestimmung einer von der Längsdynamik entkoppelten Quer-/Gierdynamik in Form einer Struktur mit zwei Freiheitsgraden. Hierin wird ein effektiver Lenkwinkel ($\delta_{eff}$) verarbeitet, indem Differenzsignal aus den Ausgangssignalen zweier paralleler Äste einer Rückkopplungsschleife 9 auf den effektiven Lenkwinkel ($\delta_{eff}$) als Eingangssignal zurückgeführt wird.

Der erste Ast enthält eine Filterfunktion (Q) in einem Block (10). Der zweite Ast enthält eine Serienschaltung aus einem Einspurmodell mit Längsdynamik (6) und einem Block (11) mit dem Produkt aus der Filterfunktion (Q) und einer inversen Übertragungsfunktion eines Einspurmodells (ESM). Für die Filterfunktion Q wird in einer bevorzugten Ausführungsform ein Tiefpass-oder PT1-Filter verwendet:

$$Q = \frac{1}{T_Q(v)s + 1},$$

wobei $T_Q(v)$ eine Zeitkonstante darstellt, für die entweder ein fester Wert angenommen, oder die an die Geschwindigkeit v angepasst wird.

In einer nicht weiter dargestellten Ausführungsform der Erfindung erfolgt ein konkreter Einsatz eines erfindungsgemäßen Verfahrens über ein Computerprogrammprodukt, das ein computerlesbares Speichermedium umfasst. Auf dem computerlesbaren Speichermedium ist ein Programm als Software gespeichert, das es einer Datenverarbeitungsanlage, einem Rechner oder einem Computer nach dem Laden in einen Speicher oder Arbeitsspeicher eines derartigen Gerätes ermöglicht, auf der Basis von mindestens einer Eingangsgröße, die von parallel installierten bekannten Regelverfahren und/oder Fahrerassistenzsystemen abgeleitet wird, das Giermoment eines Kraftfahrzeuges in der Weise zu beeinflussen, dass die Beeinflussung des Giermoments auf der Basis einer modellgestützten Vorsteuerung durch Aufbringen eines stabilisierenden zusätzlichen Giermoments unter Verarbeitung von mindestens drei von Sensorsystemen und/oder parallel installierten bekannten Fahrdynamikregelsystemen und/oder Fahrerassistenzsystemen abgeleiteten Eingangsgrößen erfolgt. Das Verfahren läuft dann so ab, wie vorstehend beschrieben.

Damit ist insgesamt nach einem erfindungsgemäßen Verfahren und/oder einem Computerprogrammprodukt eine Lösung vorgeschlagen worden, wonach als Vorsteuerung bereits vor Auftreten von störenden Abweichungen eingegriffen wird. Bekannte Regelverfahren und Fahrerassistenzsysteme mit ihren jeweiligen Aktuatoren können zusätzlich zu dem dargestellten Verfahren eingesetzt werden.

Bezugszeichenliste

1 Kraftfahrzeug
2 Einspurmodell

3     inverses erweitertes Einspurmodell
4     inverses Einspurmodell
5     Ein-/Ausschaltfunktion
6     erweitertes Einspurmodell mit Längsdynamik
7     Proportionalverstärkung
8     PID-Regler
9     Rückkopplungsschleife
10    Block mit Filterfunktion Q
11    Block mit dem Produkt aus der Filterfunktion Q und inverser Übertragungsfunktion eines Einspurmodells (ESM)

$\beta$        Schwimmwinkel
$\lambda_v, \lambda_h$    Längsschlupf an Vorderachse, Hinterachse
$\delta_{eff}$      Fahrerwunsch - effektiver Lenkwinkel
$\delta_{h/v}$      Lenkwinkel nach ESM
$\delta_{h/v\,LD}$   Lenkwinkel nach ESM mit LD-Berücksichtigung
$\delta_{HL/AL}$    zusätzlicher Lenkwinkel
$a_x$        Längsbeschleunigung
$a_y$        Querbeschleunigung
$m_z$        Moment um die z-Achse
$f_s$        Seitenkraft
$f_l$        Längskraft
$f_x$        Kraft in Richtung der x-Achse (Fahrzeuglängsachse)
$f_y$        Kraft in Richtung der y-Achse (Fahrzeugquerachse)
$l_v$        Abstand des Schwerpunkts von der Vorderachse
$l_h$        Abstand des Schwerpunkts von der Hinterachse
r         Gierrate
$r_{soll}$      Soll-Gierrate
v         Vorderachse
h         Hinterachse
SP        Schwerpunkt des Fahrzeugs
T         Spurweite
AL        aktive Vorderradlenkung
ESM       Einspurmodell
HL        aktive Hinterradlenkung
LD        Längsdynamik
ha        Hinterachse
va        Vorderachse
QH        Aktuatoren zur Quermomentenverteilung an der Hinterachse
QV        Aktuatoren zur Quermomentenverteilung an der Vorderachse
LMV       Längsmoment- oder Längskraftverteilung
LV        Aktuator zum Stellen einer Längsmoment- oder Längskraftverteilung
ABC       Active Body Control
DD        Dynamic Drive

**Patentansprüche**

1.  Verfahren zur Erhöhung der Fahrstabilität eines Kraftfahrzeugs, bei dem das Giermoment beeinflusst wird, wobei eine modellgestützte Vorsteuerung benutzt wird, um ein stabilisierendes Giermoment zu bestimmen, das auf das Kraftfahrzeug aufgebracht wird,
    **dadurch gekennzeichnet, dass** der Vorsteuerung ein um Längsdynamikeinflüsse erweitertes Einspurmodell als Fahrzeugmodell zugrunde gelegt wird, wodurch eine Entkopplung der Quer-/Gierdynamik von der Längsdynamik bewirkt wird und wobei als Eingangssignale für die Vorsteuerung ein effektiver Lenkwinkel ($\delta_{eff}$), eine Fahrzeugreferenzgeschwindigkeit (v) und ein Wert für die Längsbeschleunigung ($a_x$) verwendet werden.

2.  Verfahren nach einem der vorhergehenden Ansprüche, **dadurch gekennzeichnet, dass** das Einspurmodell (ESM) mit Längsdynamik (LD) als parametrisches - lineares zeitinvariantes System abgebildet wird, wobei insbesondere mindestens die längsdynamischen Größen Geschwindigkeit (v) und Längsbeschleunigung ($a_x$) als variierende Pa-

rameter interpretiert werden.

3. Verfahren nach dem vorhergehenden Anspruch, **dadurch gekennzeichnet, dass** in dem linearisierten System von Differentialgleichungen zeitliche Änderungen der Geschwindigkeit ($\dot{v}$) vernachlässigt wird, während die Längsbeschleunigung ($a_x$) als variierender Parameter behandelt wird.

4. Verfahren nach einem der vorhergehenden Ansprüche, **dadurch gekennzeichnet, dass** als weitere Eingangsgröße der Vorsteuerung eine Längsmoment- oder Längskraftverteilung (LMV) in dem Modell berücksichtigt wird, die insbesondere aus der Längsbeschleunigung ($a_x$) und/oder dem mittleren Längsschlupf ($\lambda_v$, $\lambda_h$) an der Vorderachse (va) und der Hinterachse (ha) berechnet wird.

5. Verfahren nach einem der vorhergehenden Ansprüche, **dadurch gekennzeichnet, dass** als weitere Eingangsgrößen der Vorsteuerung Raddrehzahlen an Vorder- und Hinterachse und/oder Masse und/oder Gierträgheitsmoment und/oder Lage des Schwerpunkts (SP) und/oder Schräglaufwinkel an der Vorder- und Hinterachse und/oder der Kraftschlusskoeffizient in dem Modell berücksichtigt werden.

6. Verfahren nach einem der vorhergehenden Ansprüche, **dadurch gekennzeichnet, dass** bei der modellgestützten Vorsteuerung mindestens eine Differenzgröße als Steuersignal für ein stabilisierendes Giermoment benutzt wird, die sich zwischen dem Einspurmodell und dem um Längsdynamik-Einflüsse erweiterten Einspurmodell ergibt.

7. Verfahren nach einem der vorhergehenden Ansprüche, **dadurch gekennzeichnet, dass** aus einem Fahrerwunsch einer Winkelvorgabe ($\delta_{eff}$) über das Einspurmodell eine Soll-Gierrate ($r_{soll}$) bestimmt wird, die anschließend zur Bildung mindestens eines Differenzwertes ($\delta_{HL/AL}$, $M_{zQV/QH}$) über das inverse Einspurmodell in einen Winkelwert ($\delta_{h/v}$) und/oder Momentenwert ($M_{zV/H}$) und ein inverses erweitertes Einspurmodell in einen Winkelwert ($\delta_{h/v,LD}$) und/oder Momentenwert ($M_{z\,h/v}$) umgesetzt wird

8. Verfahren nach einem der vorhergehenden Ansprüche, **dadurch gekennzeichnet, dass** mindestens eine proportional und/oder mit einem PID-Regler verstärkte Differenzgröße als Steuersignal für ein stabilisierendes Giermoment benutzt wird, die sich zwischen Ausgangssignalen aus dem Einspurmodell und dem um Längsdynamik-Einflüsse erweiterten Einspurmodell ergibt.

9. Verfahren nach einem der vorhergehenden Ansprüche 1 - 6, **dadurch gekennzeichnet, dass** ein effektiver Lenkwinkel ($\delta_{eff}$) nach Umformung durch ein. Einspurmodell (2) einer geregelten Vorsteuerung mit einem PID-Regler (8) und einem Einspurmodell mit Längsdynamik (6) in einer Rückkopplungsschleife (9) unterworfen wird.

10. Verfahren nach einem der vorhergehenden Ansprüche 1 - 6, **dadurch gekennzeichnet, dass** ein effektiver Lenkwinkel ($\delta_{eff}$) in einer Struktur mit zwei Freiheitsgraden verarbeitet wird, in der ein Differenzsignal aus den Ausgangssignalen eines ersten Astes einer Filterfunktion (Q) in einem Block (10) und eines zweiten Astes mit einer Serienschaltung aus einem Einspurmodell mit Längsdynamik (6) und einem Block (11) mit dem Produkt aus der Filterfunktion (Q) und einer inversen Übertragungsfunktion eines Einspurmodells (ESM) als parallele Äste einer Rückckopplungsschleife (9) auf den effektiven Lenkwinkel ($\delta_{eff}$) als Eingangssignal zurückgeführt wird.

11. Verfahren nach einem der vorhergehenden Ansprüche, **dadurch gekennzeichnet, dass** in den Funktionsblöcken (2, 3, 4, 6, 11) statt der Modelle selber nur deren Stationärwerte abgelegt sind.

12. Verfahren nach einem der vorhergehenden Ansprüche, **dadurch gekennzeichnet, dass** der Differenzwert ($\delta_{HL/AL}$) als eine korrigierende Winkelvorgabe dem Fahrerwunsch einer Winkelvorgabe ($\delta_{eff}$) überlagert in einer aktiven Vorderradlenkung (AL) und/oder einer aktiven Hinterradlenkung (HL) umgesetzt wird.

13. Verfahren nach einem der vorhergehenden Ansprüche, **dadurch gekennzeichnet, dass** in den Reglern eine Realisierung mit Aktuatoren zur Quermomentenverteilung (QV, QH) an Vorder- und/oder Hinterachse (va, ha) vorgesehen ist.

14. Computerprogrammprodukt, das ein computerlesbares Speichermedium umfasst, auf dem ein Programm gespeichert ist, welches es einer Datenverarbeitungsanlage, einem Rechner oder einem Computer ermöglicht, nachdem es in einen Speicher oder Arbeitsspeicher eines derartigen Gerätes geladen worden ist, auf der Basis von mindestens einer Eingangsgröße, die von parallel installierten bekannten Regelverfahren und/oder Fahrerassistenzsystemen abgeleitet wird, das Giermoment eines Kraftfahrzeuges zu beeinflussen, wobei dieses ein Verfahren nach einem oder mehreren der Ansprüche 1 bis 13 durchführt, um als Ausgangssignal mindestens eine Aktuatorsteuergröße für mindestens einen Aktuator zu bestimmen.

**Claims**

1. A method for increasing the driving stability of a motor vehicle, in which the yaw torque is influenced, a model-supported pilot control being used to determine a stabilising yaw torque that is applied to the motor vehicle, **characterised in that** the pilot control is based on a single-track model as vehicle model extended by longitudinal dynamic influences, whereby a decoupling of the transverse/yaw dynamics from the longitudinal dynamics is brought about and wherein an effective steering angle ($\delta_{eff}$), a vehicle reference velocity (v) and a value for the longitudinal acceleration ($a_x$) are used as the input signals for the pilot control.

2. A method according to any one of the preceding claims, **characterised in that** the single-track model (ESM) with longitudinal dynamics (LD) is mapped as a parametric linear time-invariant system, wherein, more especially at least the longitudinal dynamic variables velocity (v) and longitudinal acceleration ($a_x$) are interpreted as varying parameters.

3. A method according to the preceding claim, **characterised in that** chronological changes of the velocity (v) are ignored in the linearised system of differential equations, while the longitudinal acceleration ($a_x$) is treated as a varying parameter.

4. A method according to any one of the preceding claims, **characterised in that** a longitudinal torque distribution or longitudinal force distribution (LMV) is taken into account in the model as a further input variable of the pilot control, which, more especially, is calculated from the longitudinal acceleration ($a_x$) and/or the mean longitudinal slip ($\lambda_v$, $\lambda_h$) at the front axle (va) and the rear axle (ha).

5. A method according to any one of the preceding claims, **characterised in that** rotational wheel speeds at the front and rear axle and/or the mass and /or yaw moment of inertia and/or the centre of gravity position (SP) and/or slip angle at the front and rear axle and/or the coefficient of friction are taken into account in the model as further input variables.

6. A method according to any one of the preceding claims, **characterised in that** in the model-supported pilot control, at least one differential variable is used as the control signal for a stabilising yaw torque, which variable is produced between the single-track model and the single-track model extended by longitudinal dynamic influences.

7. A method according to any one of the preceding claims, **characterised in that** a desired yaw rate ($r_{desired}$) is determined from a driver's request for an angle input ($\delta_{eff}$) by means of the single-track model, said desired yaw rate then being converted to form at least one differential value ($\delta_{HL/AL}$, $M_{z\,QV/QH}$) by means of the inverse single-track model into an angle value ($\delta_{h/v}$) and/or torque value ($M_{z\,V/H}$) and in inverse extended single-track model being converted into an angle value ($\delta_{h/v,\,LD}$) and/or torque value ($M_{z\,V/H}$).

8. A method according to any one of the preceding claims, **characterised in that** at least one differential value amplified proportionally and/or using a PID regulator is used as the control signal for a stabilising yaw torque, which is produced between output signals from the single-track model and the single-track model extended by longitudinal dynamic influences.

9. A method according to any one of the preceding claims 1 to 6, **characterised in that** an effective steering angle ($\delta_{eff}$), after conversion by a single-track model (2), is subjected to a regulated pilot control using a PID regulator (8) and a single-track model with longitudinal dynamics (6) in a feedback loop (9).

10. A method according to any one of the preceding claims 1 to 6, **characterised in that** an effective steering angle ($\delta_{eff}$) is processed in a structure with two degrees of freedom, in which a differential signal is fed back as an input signal, from the output signals of a first branch of a filter function (Q) in a block (10), and of a second branch with a series connection of a single-track model with longitudinal dynamics (6) and a block (11) with the product of the filter function (Q) and an inverse transfer function of a single-track model (ESM) as parallel branches of a feedback loop (9) to the effective steering angle ($\delta_{eff}$).

EP 1 768 888 B1

**11.** A method according to any one of the preceding claims, **characterised in that,** instead of the models themselves, only their stationary values are stored in the function blocks (2, 3, 4, 6, 11).

**12.** A method according to any one of the preceding claims, **characterised in that** the differential value ($\delta_{HL/AL}$) is superimposed as a correcting angle input on the driver's intention for an angle input ($\delta_{eff}$) in an active front wheel steering (AL) and/or an active rear wheel steering (HL).

**13.** A method according to any one of the preceding claims, **characterised in that,** in the regulators, an implementation with actuators for lateral torque distribution (QV, QH) is provided at the front and/or rear axle (va, ha).

**14.** A computer program product, comprising a computer-readable storage medium, on which a program is stored, which allows a data processing system, a data processor or computer, once it has been loaded in a memory or working memory of an apparatus of this type, on the basis of the at least one input variable, which is derived from known regulating methods installed in parallel and/or driver assistance systems, to influence the yaw torque of a motor vehicle, the latter carrying out a method according to any one or more of claims 1 to 13, in order to determine at least one actuator control variable for at least one actuator as the output signal.

**Revendications**

**1.** Procédé permettant d'améliorer la tenue de roue d'un véhicule à moteur selon lequel on agit sur le couple de lacet, une commande préalable s'appuyant sur un modèle étant utilisé pour déterminer un couple de lacet stabilisateur appliqué sur le véhicule à moteur,
**caractérisé en ce que**
la commande préalable est basée, entant que modèle pour le véhicule sur un modèle à voie unique élargi par les influences de la dynamique longitudinale selon lequel on effectue un découplage de la dynamique transversale/de lacet et de la dynamique longitudinale et en tant que signaux d'entrée pour la commande préalable on utilise l'angle de direction effectif ($\delta_{eff}$), la vitesse de référence du véhicule (v) et la valeur de l'accélération longitudinale ($a_x$).

**2.** Procédé conforme à la revendication précédente,
**caractérisé en ce que**
le modèle à voie unique (ESM) est illustré avec la dynamique longitudinale (LD) entant que système paramétrique linéaire invariant dans le temps, en particulier au moins les grandeurs de la dynamique longitudinale correspondant à la vitesse (v) et à l'accélération longitudinale ($a_x$) étant interprétées en tant que paramètres variables.

**3.** Procédé conforme à la revendication précédente,
**caractérisé en ce que**
dans le système linéairisé d'équations différentielles, des modifications dans le temps de la vitesse (v) sont négligées tandis que l'accélération longitudinale ($a_x$) est traitée en tant que paramètre variant.

**4.** Procédé conforme à l'une des revendications précédentes,
**caractérisé en ce qu'**
entant qu'autre grandeur d'entrée, de la commande préalable on prend en considération dans le modèle la répartition du couple longitudinal ou de la force longitudinale (LMV) qui est en particulier calculée à partir de l'accélération longitudinale ($a_x$) et/ou du patinage longitudinal moyen ($\lambda_v$, $\lambda_h$) au niveau de l'essieu avant (va) et de l'essieu arrière (ha).

**5.** Procédé conforme à l'une des revendications précédentes,
**caractérisé en ce qu'**
entant qu'autre grandeur d'entrée de la commande préalable, on prend en considération dans le modèle la vitesse de rotation des roues de l'essieu avant et de l'essieu arrière et/ou la masse et/ou le couple d'inertie de lacet et/ou la position du centre de gravité (SP) et/ou l'inclinaison de l'axe pivot au niveau de l'essieu avant et de l'essieu arrière et/ou le coefficient d'adhérence limite.

**6.** Procédé conforme à l'une des revendications précédentes,
**caractérisé en ce que**
lors de la commande préalable s'appuyant sur un modèle, on utilise entant que signal de commande pour le couple de lacet stabilisateur au moins une grandeur de différentielle qui est obtenue entre le modèle à voie unique et le modèle à voie unique élargi par des influences de la dynamique longitudinale.

7. Procédé conforme à l'une des revendications précédentes,
   **caractérisé en ce qu'**
   à partir d'une demande d'angle ($\delta_{eff}$) souhaitée par le conducteur on détermine par l'intermédiaire du modèle à voie, unique un taux de lacet de consigne ($r_{soll}$) qui est ensuite transformé pour former au moins une valeur de différentielle ($\delta_{HL/AL}$, $M_{z\,QV/QH}$) par le modèle à voie unique inverse en une valeur angulaire ($\delta_{h/v}$) et/ou une valeur de couple ($M_{z\,V/H}$), et par un modèle à voie unique élargi inverse en une valeur angulaire ($\delta_{h/v,\,LD}$) et/ou une valeur de couple ($M_{z\,H/V}$).

8. Procédé conforme à l'une des revendications précédentes,
   **caractérisé en ce que**
   l'on utilise entant que signal de commande pour le couple de lacet stabilisateur au moins une grandeur différentielle proportionnelle et/ou amplifiée à l'aide d'un régulateur PID qui est obtenue entre les signaux de sortie du modèle à voie unique et du modèle à voie unique élargi par les influences de la dynamique longitudinale.

9. Procédé conforme à l'une quelconque des revendications précédentes 1 à 6,
   **caractérisé en ce que**
   l'angle de déviation effectif ($\delta_{eff}$) est soumis après transformation par un modèle à voie unique (2) à une commande préalable régulée avec un régulateur PID (8) et un modèle à voie unique élargi par les influences de la dynamique longitudinale (6) dans une boucle de rétro-action (9).

10. Procédé conforme à l'une des revendications précédentes 1-6,
    **caractérisé en ce que**
    l'angle de déviation effectif ($\delta_{eff}$) est traité dans une structure ayant deux degrés de liberté dans laquelle un signal différentiel formé par les signaux de sortie d'une première branche avec une fonction de filtrage (Q) dans un bloc (10) et d'une seconde branche avec un montage en série d'un modèle à voie unique élargi par les influences de la dynamique longitudinale (6) et d'un bloc (11) est ramené avec le produit de la fonction de filtrage (Q) et d'une fonction de transfert inverse d'un modèle à voie unique (ESM) entant que branche parallèle d'une boucle de rétro-action (9) à l'angle de déviation effectif ($\delta_{eff}$) entant que signal d'entrée.

11. Procédé conforme à l'une des revendications précédentes,
    **caractérisé en ce que**
    dans les blocs fonctionnels (2, 3, 4, 6, 11) sont déposés, au lieu des modèles eux-mêmes, uniquement leurs valeurs stationnaires.

12. Procédé conforme à l'une des revendications précédentes,
    **caractérisé en ce que**
    la valeur de différence ($\delta_{HL/AL}$) est convertie en un braquage de roue avant actif (AL) et/ou en un braquage de roue arrière actif (HL), en tant que demande d'angle de correction en étant superposée à la demande d'angle ($\delta_{eff}$) souhaitée par le conducteur.

13. Procédé conforme à l'une des revendications précédentes,
    **caractérisé en ce que**
    dans le régulateur il est prévu une réalisation avec des actionneurs pour permettre de répartir les couples transversaux (QV, QH) sur l'essieu avant et/ou sur l'essieu arrière (va, ha).

14. Produit programme d'ordinateur qui comporte un milieu de mémoire lisible par ordinateur sur lequel est enregistré un programme qui permet à une installation de traitement de données à un calculateur ou à un ordinateur, après qu'il ait été chargé dans une mémoire ou une mémoire de travail d'un tel appareil, à partir d'au moins une grandeur d'entrée qui est dérivée de procédés de régulation connus et/ou de systèmes d'assistance au conducteur connus installés en parallèle, d'agir sur le couple de lacet d'un véhicule, celui-ci mettant en oeuvre un procédé conforme à l'une ou plusieurs des revendications 1 à 13 pour déterminer entant que signal de sortie au moins une grandeur de commande d'actionneur pour au moins un actionneur.

Figur 1

Figur 2

Figur 3a

Figur 3b

Figur 4

log(Schlupf)

Figur 5

Figur 6

Figur 7

Figur 8

Figur 9

Figur 10

Figur 11

Figur 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10221717 A1
- DE 10141273 A1
- DE 4028320 C2
- EP 575151 A1
- DE 19515051 A1
- DE 19515053 A1
- DE 10011779 A1
- DE 10212582 A1
- DE 4030704 A1

**In der Beschreibung aufgeführte Nicht-Patentliteratur**

- **J.T. KASSELMANN ; T.W. KERANEN.** Adaptive Steering. *Bendix Technical Journal,* 1969, 26-35
- **W. KRÄMER ; M. HACKL.** Fisita-Kongress. *Potential functions and benefits of electronic steering assistance,* 1996, 1-15
- Funktion und Sicherheitskonzept der aktiven Hinterachskinematik von BMW. *Automobiltechnische Zeitschrift,* 1990, vol. 10, 580-587
- **A. VAN ZANTEN ; BOSCH.** FDR - Die Fahrdynamikregelung. *ATZ Automobiltechnische Zeitschrift,* 1994, vol. 96 (11), 674-689
- **G. FISCHER ; W. PFAU ; H.-S. BRAUN ; C. BILLIG.** x-Drive - Der neue Allradantrieb im BMW X3 und BMW X5. *Automobiltechnische Zeitschrift ATZ,* 2004
- Dynamik der Kraftfahrzeuge. **MANFRED MITSCHKE.** Antrieb und Bremsung. Springer Verlag, 1995, vol. A